# EUROPEAN PATENT APPLICATION

(11) **EP 4 804 321 A1**
(43) Date of publication of application: **09.09.2026**
(21) Application number: 25732670.2
(22) Date of filing: 23.01.2025
(51) Int. Cl.: H01M 50/503

(54) **BATTERY DEVICE, ELECTRIC DEVICE AND MANUDACTURING METHOD FOR BATTERY DEVICE**

(71) Applicant: Contemporary Amperex Technology (Hong Kong) Limited, Central, Hong Kong (HK)
(72) Inventor: WANG, Yalei, Ningde, Fujian 352100 (CN); ZHOU, Huiping, Ningde, Fujian 352100 (CN); CHEN, Juntao, Ningde, Fujian 352100 (CN)
(74) Representative: Gong, Jinping
(86) International application number: PCT/CN2025/074326
(87) International publication number: WO 2026/156597

(57) **Abstract**

A battery apparatus, an electric apparatus, and a method for processing a battery apparatus are provided, and pertain to the field of battery technologies. The battery apparatus includes multiple battery cell groups, where the multiple battery cell groups are stacked in a first direction, and each battery cell group includes at least one pouch cell; and each of the battery cell groups located between two ends in the first direction has one terminal in a second direction electrically connected to the battery cell group upstream in the first direction, and the other terminal in the second direction electrically connected to the battery cell group downstream in the first direction; where a flexible bent conductive structure is formed at a connection position of the two interconnected battery cell groups, and the first direction and the second direction are arranged at an angle.

## Description

### TECHNICAL FIELD

This application relates to the technical field of batteries, and in particular, to a battery apparatus, an electric apparatus, and a method for processing a battery apparatus.

### BACKGROUND

In recent years, new energy vehicles have experienced leapfrog development. In the field of electric vehicles, traction batteries, as the power source of electric vehicles, plays an irreplaceable and crucial role. Some traction batteries use pouch cells. However, the production efficiency of such traction batteries is low.

### SUMMARY

This application provides a battery apparatus, an electric apparatus, and a method for processing a battery apparatus that improve the production efficiency of the battery apparatus.

According to a first aspect, an embodiment of this application provides a battery apparatus. The battery apparatus includes multiple battery cell groups, where the multiple battery cell groups are stacked in a first direction, and each battery cell group includes at least one pouch cell; and each of the battery cell groups located between two ends in the first direction has one terminal in a second direction electrically connected to the battery cell group upstream in the first direction, and the other terminal in the second direction electrically connected to the battery cell group downstream in the first direction; where a flexible bent conductive structure is formed at a connection position of the two interconnected battery cell groups, and the first direction and the second direction are arranged at an angle.

In the above technical solution, each two adjacent battery cell groups are connected together and the connection position is bent, so as to stack the two adjacent battery cell groups in the first direction. Then one terminal of the battery cell group in the second direction is electrically connected to the battery cell group upstream in the first direction, and the other terminal of the battery cell group in the second direction is electrically connected to the battery cell group downstream in the first direction. This can effectively improve the grouping efficiency, thereby improving the production efficiency of the battery apparatus. Moreover, since the connection of adjacent battery cell groups does not require a conductive bracket, the operation space for connecting adjacent battery cell groups is relatively large, thereby reducing the difficulty of the connection operation. Additionally, the connection quality is easy to inspect, and the connection position is easy to repair, thereby enhancing the reliability of the battery apparatus. Furthermore, since the conductive bracket is eliminated, the number of components is reduced, reducing the weight and cost of the battery apparatus. Also, the space occupied by the conductive bracket is saved, which is beneficial for increasing the energy density of the battery apparatus.

In some embodiments, a thickness direction of the pouch cell is the first direction, and the battery cell group includes one pouch cell or multiple pouch cells laid flat on a plane perpendicular to the first direction.

In the above technical solution, a total thickness of the multiple battery cell groups stacked in the first direction is relatively small in the first direction, occupying small space. The flexible bent conductive structure is bent in the thickness direction of the pouch cell, so the flexible bent conductive structure requires a short length, making it less prone to breaking and ensuring reliable conductivity. Additionally, when the battery cell group includes multiple pouch cells laid flat on the plane perpendicular to the first direction, no bending step is required at the connection points of the multiple pouch cells in the battery cell group, thereby improving the grouping efficiency.

In some embodiments, the multiple pouch cells laid flat in the battery cell group are arranged in the second direction, and two adjacent pouch cells are connected at adjacent positions.

In the above technical solution, rapid grouping can be implemented, improving the production efficiency.

In some embodiments, the battery apparatus includes a first cell array, the first cell array includes the multiple battery cell groups stacked in the first direction, and each battery cell group in the first cell array includes one pouch cell.

In the above technical solution, the number of pouch cells included in each battery cell group of the first cell array is set to one, so that the structure of the first cell array is simplified, improving the grouping efficiency. Moreover, operation space for connecting two adjacent battery cell groups can be increased, reducing the operation difficulty of connecting two adjacent battery cell groups. Additionally, the connection quality is easy to inspect, and the connection position is easy to repair, thereby enhancing the productivity and reliability of the battery apparatus.

In some embodiments, the first direction is a thickness direction of the pouch cell, the second direction is a length direction of the pouch cell, and same-side terminals of two adjacent pouch cells are connected by the flexible bent conductive structure.

In the above technical solution, the first direction is set to the thickness direction of the pouch cell, the second direction is set to the length direction of the pouch cell, the same-side terminals of two adjacent pouch cells in the length direction are connected by the flexible bent conductive structure, and the two adjacent pouch cells are stacked in the thickness direction. This facilitates both the connection of two adjacent pouch cells and the bending of the flexible bent conductive structure, reducing the processing difficulty of the first cell array. Additionally, the length of the flexible bent conductive structure is reduced, thereby reducing costs.

In some embodiments, each pouch cell in the first cell array has a same length, and each pouch cell has a same width.

In the above technical solution, the specifications of multiple pouch cells can be almost identical, which is beneficial for the processing of pouch cells. Moreover, during arrangement, there is no need to consider that the difference in the shapes of different pouch cells may affect the arrangement, thereby improving production efficiency. This also facilitates the alignment of the two side edges in the width direction and the two side edges in the length direction of each two adjacent pouch cells in the first cell array, making the space occupied by all pouch cells of the first cell array in the length direction of the pouch cells consistent with the space occupied by one pouch cell in the length direction, and the space occupied by all pouch cells in the first cell array in the width direction of the pouch cells consistent with the space occupied by one pouch cell in the width direction. This greatly reduces the overall space occupation of the first cell array in the length direction and width direction of the pouch cells, helping to increase the energy density of the battery apparatus.

In some embodiments, the battery apparatus includes multiple first cell arrays arranged in the second direction.

In the above technical solution, when the overall spatial dimension of the battery apparatus in the second direction is large, the second direction is set to the length direction of the pouch cell, and the battery apparatus includes multiple first cell arrays arranged in the second direction. This can reduce the length of a single pouch cell, lower the processing difficulty of a single pouch cell, and improve the structural strength and structural stability of a single pouch cell.

In some embodiments, adjacent first cell arrays arranged along the second direction are connected by an inter-array conductive structure.

In the above technical solution, two adjacent first cell arrays arranged along the second direction are connected by the inter-array conductive structure, allowing the adjacent first cell arrays in the second direction to be connected in series or in parallel. This can simplify the electrode output of multiple first cell arrays, and also meet the power parameter design requirements of the battery apparatus.

In some embodiments, in the two adjacent first cell arrays arranged along the second direction, adjacent terminals of the two battery cell groups located at the ends in the first direction and opposite in the second direction are connected by the inter-array conductive structure.

In the above technical solution, the inter-array conductive structure can be located at one end in the first direction between the two first cell arrays connected by it. This can reduce the length of the inter-array conductive structure, reduce costs, reduce the space occupation of the inter-array conductive structure inside the battery apparatus, and increase the energy density of the battery apparatus.

In some embodiments, the battery apparatus includes a second cell array, where the second cell array includes multiple battery cell groups stacked in the first direction, and at least one battery cell group in the second cell array includes multiple pouch cells.

In the above technical solution, at least one battery cell group in the second cell array includes multiple pouch cells, which can reduce the number of flexible bent conductive structures, thereby reducing the number of times for bending the conductive structures, and improving the grouping efficiency of the second cell array.

In some embodiments, the first direction is a thickness direction of the pouch cell, and all pouch cells in the battery cell group including the multiple pouch cells are laid flat on a plane perpendicular to the first direction.

In the above technical solution, no bending step is required at the connection points of the multiple pouch cells in the battery cell group, thereby improving the grouping efficiency.

In some embodiments, the second direction is a length direction of the pouch cell, the multiple pouch cells included in the battery cell group in the second cell array are arranged along the second direction, and adjacent terminals of two adjacent pouch cells are connected by a conductive structure, and the conductive structure at the end of the battery cell group in the second direction is a flexible structure and is bent to form the flexible bent conductive structure.

In the above technical solution, the first direction is set to the thickness direction of the pouch cell, the second direction is set to the length direction of the pouch cell, multiple pouch cells included in the battery cell group in the second cell array are arranged along the second direction, adjacent terminals of two adjacent pouch cells are connected by a conductive structure, and the conductive structure located at the end of the battery cell group in the second direction is a flexible structure and is bent to form the flexible bent conductive structure. Such design improves the grouping efficiency of the second cell array and reduces the length of the conductive structure and the flexible bent conductive structure, thereby saving costs.

In some embodiments, each battery cell group in the second cell array has a consistent total length in the second direction.

In this way, the space occupied by all battery cell groups in the second cell array along the second direction is consistent with the space occupied by a single battery cell group in the second direction, which can reduce the space occupation in the second direction, helping to increase the energy density of the battery apparatus.

In some embodiments, each battery cell group in the second cell array includes pouch cells in a same shape, a same arrangement, and a same quantity.

In the above technical solution, the multiple battery cell groups are identical in appearance, which facilitates batch production of battery cell groups. Moreover, during arrangement, there is no need to consider that the difference in the shapes of different pouch cells may affect the arrangement, thereby improving production efficiency. Additionally, during bending of the conductive structures, grouping pouch cells of an equal quantity can prevent issues of miscounting. Moreover, this design facilitates projection overlapping in the first direction after stacking. The second cell array formed by stacking such multiple battery cell groups in the first direction occupies the same space perpendicular to the first direction as a single battery cell group in the second cell array does, thereby reducing the overall space occupation of the second cell array in a direction perpendicular to the first direction, and increasing the energy density of the battery apparatus. Furthermore, this design helps achieve specification consistency for the flexible bent conductive structures in the second cell array, instead of some being longer and some being shorter. This facilitates processing and batch production, and makes it easier to control the overall conductive performance of the battery apparatus.

In some embodiments, the second direction is the length direction of the pouch cell, electrode terminals extend from two terminals of the pouch cell in the length direction, adjacent pouch cells are connected by the adjacent electrode terminals, and the battery cell group includes one pouch cell or multiple pouch cells arranged sequentially in the second direction.

In the above technical solution, the electrode terminals are arranged as extending from two terminals of the pouch cell in the length direction, thereby reducing the processing difficulty of the pouch cell. Moreover, the second direction is set to the length direction of the pouch cell, allowing one end in the second direction of each battery cell group located between two ends in the first direction to be electrically connected to the battery cell group upstream in the first direction by the flexible bent conductive structure, and the other end in the second direction to be electrically connected to the battery cell group downstream in the first direction by the flexible bent conductive structure. For example, during processing, multiple pouch cells can first be lined up in the length direction of the pouch cells, each two adjacent electrode terminals are connected to obtain the conductive structure, and then the conductive structure is bent, so that the multiple pouch cells can be divided into multiple battery cell groups and the multiple battery cell groups can be stacked in the thickness direction of the pouch cells. This can simplify processing, improve grouping efficiency, and reduce the length of the flexible bent conductive structure. Moreover, the bent conductive structure only occupies the space on two sides of the pouch cell in the length direction, and does not occupy the space on two sides of the pouch cell in the width direction. When the pouch cells are arranged in the width direction in a same way as those in the height direction, the height space occupied by the battery apparatus can be reduced.

In some embodiments, the first direction is the thickness direction of the pouch cell, a width direction of the pouch cell is a third direction, and projections of two adjacent battery cell groups stacked in the first direction overlap in the first direction.

In the above technical solution, since the first direction is the thickness direction of the pouch cell, the space occupation in the first direction after multiple battery cell groups are stacked along the first direction can be reduced. Moreover, the cell array formed by stacking such multiple battery cell groups in the first direction occupies the same space perpendicular to the first direction as a single battery cell group in the cell array does, thereby reducing overall space occupation of the cell array in a direction perpendicular to the first direction, and increasing the energy density of the battery apparatus.

In some embodiments, the pouch cell includes a pouch shell and an electrode terminal, the electrode terminal is connected to an electrode assembly inside the pouch shell, and includes a lead-out portion extending out of the pouch shell, adjacent lead-out portions of adjacent pouch shells are directly or indirectly connected to form a conductive structure, and the conductive structure at the end of the battery cell group in the second direction is a flexible structure and is bent to form the flexible bent conductive structure.

In the above technical solution, the adjacent electrode terminals of two adjacent pouch cells are connected to form the conductive structure, and the conductive structure located at the end of the battery cell group in the second direction is arranged as a flexible structure and bent to form the flexible bent conductive structure. This facilitates the processing of the conductive structure and the flexible bent conductive structure, and helps reduce the lengths of the electrode terminals, the conductive structure, and the flexible bent conductive structure, thereby reducing production costs.

In some embodiments, in the flexible bent conductive structure, the lead-out portions from the two pouch cells are lap-connected.

In the above technical solution, the two adjacent battery cell groups can be connected through direct lap-connection of the lead-out portions of the pouch cells. This allows for relatively large connection area for the two battery cell groups, resulting in a more stable and reliable connection between the two battery cell groups. Moreover, compared to indirect connection, direct connection can simplify the structure, reduce parts, and improve assembly efficiency, further enhancing grouping efficiency and increasing productivity.

In some embodiments, the two lead-out portions forming the lap connection are connected at a lap joint by welding or conductive adhesive.

In the above technical solution, the operation is straightforward, and a stable and reliable electrical connection can be implemented.

In some embodiments, a lap-connection position of the two lead-out portions in the flexible bent conductive structure does not overlap with a bending position of the flexible bent conductive structure.

In the above technical solution, the flexible bent conductive structure can be easily bent, and the bending does not adversely affect the reliability and stability of the lap-connection between the lead-out portions, thereby enhancing the connection reliability and electrical connection stability between battery cell groups.

In some embodiments, the bending position of the flexible bent conductive structure is centered, and the lap-connection position of the two lead-out portions in the flexible bent conductive structure is located on a side of the bending position in the first direction and opposite the corresponding battery cell group in the second direction.

In the above technical solution, along the extending direction of the flexible bent conductive structure, the bending position of the flexible bent conductive structure is at an equal distance to each battery cell group. This is beneficial for enhancing the structural stability of the flexible bent conductive structure and reducing the stress concentration of the flexible bent conductive structure.

In some embodiments, the two lead-out portions forming the lap connection in the flexible bent conductive structure are a first lead-out portion and a second lead-out portion, the battery cell group with the first lead-out portion extending out is a first battery cell group, the battery cell group with the second lead-out portion extending out is a second battery cell group, and the first battery cell group and the second battery cell group are adjacently stacked; a length of the first lead-out portion is greater than a length of the second lead-out portion; the first lead-out portion includes an extension section, a bending section, and a lap section, where the extension section is opposite the first battery cell group in the second direction, the lap section is spaced from the extension section in the first direction, the lap section is opposite the second battery cell group in the second direction, and the bending section is bent, with two ends respectively connected to the extension section and the lap section; and the second lead-out portion is opposite the second battery cell group in the second direction, and is lap-connected to the lap section.

In the above technical solution, it is easy to realize that the lap-connection position of the two lead-out portions in the flexible bent conductive structure does not overlap with the bending position of the flexible bent conductive structure, and the bending is also quite easy.

In some embodiments, the second direction is the length direction of the pouch cell, and each pouch cell has the first lead-out portion and the second lead-out portion respectively at two ends in the length direction.

In the above technical solution, the two lead-out portions of each pouch cell along the length direction are set to be of different lengths, so that each two adjacent pouch cells can be connected through one long lead-out portion and one short lead-out portion at the joint. This makes it easy to realize that the lap-connection position of the two lead-out portions in the flexible bent conductive structure does not overlap with the bending position of the flexible bent conductive structure.

In some embodiments, two lead-out portions forming the lap connection in the flexible bent conductive structure have a same length, and the bending position of the flexible bent conductive structure is located at a non-connected overlapping part of the two lead-out portions.

In the above technical solution, during production of pouch cells, the two lead-out portions at two terminals of a pouch cell can be cut to equal lengths. During arrangement of multiple pouch cells, there is no need to select the placement direction due to different lengths of the lead-out portions, thereby improving production efficiency.

In some embodiments, in the flexible bent conductive structure, the lead-out portions from the two pouch cells are indirectly connected by an adapter piece.

In the above technical solution, the lead-out portions of the two pouch cells are connected through the adapter piece, thereby reducing the lengths of the lead-out portions, and reducing the processing difficulty of the pouch cells. Additionally, standardized adapter pieces can be used for rapid and efficient connection processing, making the connection of multiple pouch cells convenient and efficient, with consistent conductive performance across all flexible bent conductive structures.

In some embodiments, the adapter piece is lap-connected to the lead-out portion.

In the above technical solution, the lap connection of the adapter piece to the lead-out portion allows for relatively large connection area between the adapter piece and the lead-out portion, resulting in a stable and reliable connection between the two battery cell groups.

In some embodiments, a lap-connection position of the adapter piece and the lead-out portion does not overlap with a bending position of the flexible bent conductive structure.

In the above technical solution, the flexible bent conductive structure is not bent at the lap-connection position of the adapter piece and the lead-out portion. This makes it easy for the flexible bent conductive structure to bend without adversely affecting the reliability and stability of the lap connection between the adapter piece and the lead-out portion, thereby enhancing the connection reliability and electrical connection stability between the battery cell groups.

In some embodiments, the flexible bent conductive structure is bent at the adapter piece, and the bending position of the flexible bent conductive structure is centered.

In the above technical solution, the structural stability of the flexible bent conductive structure can be enhanced, and the stress concentration of the flexible bent conductive structure can be reduced. Moreover, the adapter piece can be relatively long, with one part used for lap-connection to the lead-out portion, and the rest part for bending, thereby simplifying the design of the lead-out portion and further reducing the length of the lead-out portion.

In some embodiments, the bending position of the flexible bent conductive structure does not overlap with a conductive connection position of the two battery cell groups in the flexible bent conductive structure.

In the above technical solution, the bending position of the flexible bent conductive structure is set as not overlapping with the conductive connection position of the two battery cell groups in the flexible bent conductive structure. This allows the flexible bent conductive structure to be bent easily, and the bending does not adversely affect the connection reliability and stability of the two battery cell groups in the flexible bent conductive structure, thereby enhancing the connection reliability and electrical connection stability between the battery cell groups.

In some embodiments, a bending corner position of the flexible bent conductive structure is a rounded corner.

In the above technical solution, the bending corner position of the flexible bent conductive structure is arranged as a rounded corner, which can alleviate the issue of stress concentration at the bending position, thereby enhancing the connection reliability and conductive stability between two adjacent battery cell groups.

In some embodiments, the flexible bent conductive structure is U-shaped or C-shaped.

In the above technical solution, the U-shaped flexible bent conductive structure can save space, and the C-shaped flexible bent conductive structure facilitates processing, thereby reducing the processing difficulty.

In some embodiments, two side borders of the battery cell group in the third direction are a first border and a second border, and the flexible bent conductive structure is arranged closer to the first border than the second border in the third direction, to create a first reserved space on a side of the flexible bent conductive structure closer to the second border, where the first direction, the second direction, and the third direction are mutually perpendicular to each other.

In the above technical solution, the first reserved space can be utilized to accommodate other components, fully utilizing the space in the third direction where the flexible bent conductive structure is disposed in the battery apparatus. This reduces the occupation of other spaces, thereby helping to increase the energy density of the battery apparatus.

In some embodiments, the flexible bent conductive structure is located on a side, closer to the first border, of a centerline of the battery cell group in the third direction.

In the above technical solution, the dimension of the first reserved space in the third direction can exceed more than half of the dimension of the battery cell group in the third direction, allowing the first reserved space to accommodate more components, and making better use of the space in the third direction where the flexible bent conductive structure is disposed in the battery apparatus. This reduces the occupation of other spaces, thereby helping to increase the energy density of the battery apparatus.

In some embodiments, the battery apparatus includes a box for housing the pouch cells, and a reinforcing partition is sandwiched between at least two adjacent battery cell groups in the first direction, where a stiffness of the reinforcing partition is greater than a stiffness of the pouch shell of the pouch cell, the reinforcing partition has a connecting portion protruding from the battery cell group in the second direction, and the connecting portion extends into the first reserved space and is connected to the box.

In the above technical solution, with the characteristic that the stiffness of the reinforcing partition is greater than the stiffness of the pouch shell, the reinforcing partition can alleviate the deformation issue of the pouch cell. Moreover, through the connection of the reinforcing partition to the box, the reinforcing partition can more reliably and stably support the battery cell group, enhancing the stability of the battery apparatus. Additionally, since the reinforcing partition is connected to the box through the connecting portion that extends into the first reserved space, the occupation of other spaces can be reduced, and the space saved in the third direction by the flexible bent conductive structure can be effectively utilized, thereby helping to increase in the energy density of the battery apparatus.

In some embodiments, the box includes a box body and a mounting bracket, where the mounting bracket is installed inside the box body, the mounting bracket is disposed on a side of the battery cell group in the second direction, and the connecting portion is connected to the mounting bracket.

In the above technical solution, the mounting bracket is disposed inside the box body, and the reinforcing partition is connected to the box through the mounting bracket. This can reduce the difficulty of connecting the reinforcing partition to the box, and implement flexible installation of the reinforcing partition to the box. Moreover, the mounting bracket is disposed on a side of the battery cell group in the second direction, allowing the connecting portion of the reinforcing partition that protrudes from the battery cell group in the second direction to easily approach the mounting bracket and form a connection to the mounting bracket.

In some embodiments, a side edge of the connecting portion closer to the second border in the third direction is a first edge, a side edge of the mounting bracket closer to the second border in the third direction is a second edge, both the first edge and the second edge are located on a side of the second border closer to the first border, to enable the connecting portion and the mounting bracket to form a second reserved space on a side far from the first border in the third direction.

In the above technical solution, the second reserved space is formed on the side of the connecting portion and the mounting bracket far from the first border in the third direction, and the second reserved space can be used for arranging other components of the battery apparatus, such as circuitry. This can reduce space occupation in other positions, helping to improve the compactness and energy density of the battery apparatus.

In some embodiments, one of a length direction and a width direction of the box is the first direction, and the other is the second direction, a height direction of the box is the third direction, and inside the box body, multiple mounting brackets arranged along the first direction are provided at two end positions in the second direction.

In the above technical solution, multiple mounting brackets are arranged, facilitating flexible connection to the multiple reinforcing partitions arranged in the first direction, and reducing the difficulty of connection between the reinforcing partitions and the mounting brackets. Moreover, the mounting brackets are arranged at the two ends inside the box body in the second direction, thereby reducing the difficulty of connection between the mounting brackets and the box body.

In some embodiments, the thickness direction of the pouch cell is the first direction, the battery cell group includes one pouch cell or multiple pouch cells laid flat on the plane perpendicular to the first direction, and the reinforcing partition is sandwiched between at least two adjacent battery cell groups in the first direction, where a thickness direction of the reinforcing partition is the first direction, the stiffness of the reinforcing partition is greater than the stiffness of the pouch shell of the pouch cell, a thickness of the reinforcing partition is less than a thickness of the battery cell group, and the reinforcing partition is configured as capable of exchanging heat with an electrode assembly inside the pouch cell through the pouch shell in contact with the reinforcing partition.

In the above technical solution, the heat transfer capability of the reinforcing partition can be utilized to enable the reinforcing partition to achieve the purposes of dissipating heat and equalizing temperature for the pouch cell, optimizing the performance and service life of the pouch cell. Moreover, the reinforcing partition is disposed between adjacent pouch cells, reducing the heat transfer between adjacent pouch cells on two sides of the reinforcing partition, thereby enhancing the overall reliability of the battery apparatus. Additionally, since the thickness of the reinforcing partition is less than the thickness of the battery cell group, the arrangement of the reinforcing partition does not take up too much space, which is conducive to increasing the energy density of the battery apparatus.

In some embodiments, the reinforcing partition covers more than 80% of a total area of all the pouch cells in the battery cell group.

In the above technical solution, the reinforcing partition covers more than 80% of the total area of all the pouch cells in the battery cell group, allowing for a relatively large heat transfer surface and support surface between the battery cell group and the reinforcing partition. This allows the reinforcing partition to provide good support, heat transfer, and separation for the battery cell group.

In some embodiments, multiple reinforcing partitions are sandwiched between the multiple battery cell groups stacked in the first direction, only one of the reinforcing partitions being sandwiched between each two adjacent battery cell groups, and two adjacent reinforcing partitions in the first direction are connected by a connecting plate located on a side of the battery cell group in the third direction, where the first direction, the second direction, and the third direction are mutually perpendicular to each other.

In the above technical solution, two adjacent reinforcing partitions in the first direction are connected by the connecting plate located on a side of the battery cell group in the third direction, enabling the reinforcing partition to support the pouch cell more reliably. Additionally, the arrangement position of the connecting plate does not interfere with the battery cell group or interfere with the flexible bent conductive structure in the second direction.

In some embodiments, a buffer element is sandwiched between at least two adjacent battery cell groups in the first direction, where a stiffness of the buffer element is less than the stiffness of the pouch shell.

In the above technical solution, the buffer element is disposed between two adjacent battery cell groups, and the stiffness of the buffer element is less than the stiffness of the pouch shell, so that the buffer element can provide space for the battery cell group to swell. This allows the buffer element to effectively absorb the swelling deformation of the battery cell group, vibrations from external impacts, and the like, enhancing the overall structural stability of the battery apparatus.

In some embodiments, a buffer element is sandwiched between at least two adjacent battery cell groups in the first direction, where a stiffness of the buffer element is less than the stiffness of the pouch shell; and multiple reinforcing partitions and multiple buffer elements are sandwiched between the multiple battery cell groups stacked in the first direction, each battery cell group being sandwiched between the buffer element and the reinforcing partition.

In the above technical solution, each battery cell group is sandwiched between the buffer element and the reinforcing partition, allowing for more balanced arrangement of the reinforcing partitions and the buffer elements, and ensuring stable and reliable support, heat exchange, and buffering effects for each battery cell group.

In some embodiments, the pouch shell of the pouch cell includes two membrane portions arranged and connected in the thickness direction of the pouch cell, the two membrane portions each define an accommodating groove, the accommodating grooves of the two membrane portions are open towards each other in the thickness direction of the pouch cell, and jointly form an accommodating cavity of the pouch shell, and the electrode assembly of the pouch cell is disposed in the accommodating cavity.

In the above technical solution, the pouch shell has a simple structure and is easy to process, which is beneficial to increasing the volume of the pouch shell, thereby increasing the energy density of the pouch cell.

In some embodiments, a wall thickness of the membrane portion is less than or equal to 0.2 mm, a size of the pouch cell in the thickness direction of the pouch cell is a first size, a size of the membrane portion in the thickness direction of the pouch cell is a second size, a ratio of the second size to the first size is greater than or equal to 0.4 and less than or equal to 0.6, and the first size is greater than or equal to 5 mm and less than or equal to 70 mm.

In the above technical solution, the pouch shell in the pouch cell occupies a small volume and has a lighter mass, which allows the electrode assembly in the pouch cell to account for a larger proportion in terms of volume and mass, thereby greatly increasing the energy density of the pouch cell. Moreover, the pouch cell can have a relatively large thickness and high energy density. With the same volume, compared to multiple thinner pouch cells, a smaller number of pouch cells are arranged in this embodiment. This can reduce the proportion of the pouch shells therein, enabling the multiple pouch cells within the same volume to achieve a higher energy density. This can also reduce the number of structural components in the battery apparatus, such as the reinforcing partitions and buffer elements, and increase the arrangement space for the pouch cells in the battery apparatus, thereby greatly increasing the overall energy density of the battery apparatus.

In some embodiments, the two membrane portions are separate parts and each has edge sealing structures on all four sides of the pouch cell.

In the above technical solution, a single membrane portion is easy to process, reducing the processing difficulty.

In some embodiments, the two membrane portions are an integral part and have edge sealing structures on one long side and two short sides among the four sides of the pouch cell.

In the above technical solution, the number of edge sealing operations can be reduced, and the overall dimension of the pouch cell in the width direction can be reduced, thereby increasing the energy density. Moreover, compared to edge sealing on all four sides, omitting edge sealing on one side can prevent leakage issues caused by inadequate sealing, thereby enhancing the reliability of the pouch cell.

In some embodiments, the battery apparatus includes a cell array, the cell array includes multiple battery cell groups stacked in the first direction, and the battery apparatus includes a box for housing the cell array, where one of a length direction and a width direction of the box is the first direction, and the other is the second direction, the thickness direction of the pouch cell is the first direction, the second direction is the length direction of the pouch cell, the width direction of the pouch cell is consistent with a height direction of the box, and the box includes cover plates arranged on two sides of the cell array in the height direction of the box.

In the above technical solution, such arrangement of pouch cells can improve the uniformity of the forces exerted on the pouch cells, which is conducive to the heat dissipation of each pouch cell.

In some embodiments, at least one of the cover plates exchanges heat with the cell array.

In the above technical solution, such arrangement of pouch cells allows each pouch cell to effectively exchange heat with the cover plate. This improves the consistency and uniformity of temperature regulation for each pouch cell, thereby enhancing the operational stability and reliability of the cell array, and improving the performance of the battery apparatus.

In some embodiments, structural adhesive is filled between the cell array and the cover plate.

In the above technical solution, the stiffness of the pouch cell in the height direction of the box can be enhanced.

In some embodiments, the structural adhesive is thermal conductive adhesive.

The above technical solution facilitates the heat dissipation of the pouch cell.

In some embodiments, a glue blocking strip is disposed inside the box, the cover plate includes a bottom plate located below the cell array, a fit gap is formed between bottoms of two adjacent pouch cells arranged in the first direction, and the glue blocking strip is located between the fit gap and the bottom plate.

In the above technical solution, the glue blocking strip arranged can prevent the structural adhesive from overflowing to the adjacent pouch cells, reducing the likelihood of forming hard structures due to adhesive overflow. This can mitigate localized stress concentration issues between adjacent pouch cells and reduce the risk of damage to the pouch cells.

In some embodiments, the two adjacent pouch cells share one glue blocking strip.

In the above technical solution, two adjacent pouch cells share one glue blocking strip, thereby reducing the number of glue blocking strips arranged, and improving the assembly efficiency.

In some embodiments, the glue blocking strip is a glue blocking foam, and the glue blocking strip is bonded to the bottom plate; or the glue blocking strip is a single-sided adhesive strip, and the glue blocking strip is bonded to the bottom of the pouch cell.

In the above technical solution, the glue blocking foam has good compressibility, allowing the pouch cell to compress the glue blocking strip to better prevent structural adhesive from overflowing to adjacent pouch cells. Additionally, the glue blocking strip is bonded to the bottom plate, facilitating the installation and fixation of the glue blocking strip. Alternatively, with the glue blocking strip designed as a single-sided adhesive strip, the glue blocking strip can be easily bonded to the bottom of the pouch cell, making the glue blocking strip and the pouch cell fixed as a whole, thereby improving the overall assembly efficiency of the battery apparatus.

In some embodiments, the battery apparatus further includes a heat exchange plate, where the heat exchange plate is disposed between the cell array and at least one cover plate.

In the above technical solution, the design of the heat exchange plate can optimize the temperature regulation effect on the cell array.

In some embodiments, the pouch cell is any one of a lithium iron phosphate battery cell, a ternary battery cell, and a solid-state battery cell.

In the above technical solution, using the above types of pouch cells can provide more options for the design of the battery apparatus, so as to meet different usage requirements. The pouch cell is a lithium iron phosphate battery cell, featuring high reliability, long cycle life, light weight, large capacity, and small internal resistance. The pouch cell is a ternary battery cell, featuring high energy density and good electrochemical performance. The pouch cell is a solid-state battery cell, featuring high energy density, high reliability, light weight, and good performance in both high and low temperatures.

In some embodiments, the pouch cell is a lithium iron phosphate battery cell, and in a positive electrode material of the pouch cell, a ratio of a positive electrode active material, a binder, and a conductive agent is 96:(1-3):(1-3); and the pouch cell is a ternary battery cell, and in a positive electrode material of the pouch cell, a ratio of a positive electrode active material, a binder, and a conductive agent is 96:(2-3):(1-2).

In the above technical solution, when the pouch cell is a lithium iron phosphate battery cell, a high proportion of positive electrode active material means that more electrochemically reactive substances can be accommodated within the limited electrode assembly. This helps increase the capacity and energy density of the battery apparatus, allowing the lithium iron phosphate battery cell to output higher power with relatively small volume and weight, meeting application scenarios with specific energy density requirements. The use of binders and conductive agents within the above ranges can reduce the cost of auxiliary materials, thereby lowering the overall cost of the battery apparatus. When pouch cell is a ternary battery cell, due to the relatively complex structure and surface properties of the ternary material, using the positive electrode active material, binder, and conductive agent at the above ratio ensures good adhesion between the positive electrode active material particles and between the active material and the current collector. This increases the mechanical stability and integrity of the electrode assembly, reduces the risk of active material shedding and electrode pulverization during charge and discharge, and extends the cycle life of the battery apparatus.

According to a second aspect, an embodiment of this application further provides an electric apparatus including the battery apparatus according to any one of the above solutions.

In the above technical solution, since the production efficiency of the battery apparatus is improved, the manufacturing cost of the electric apparatus can be reduced.

According to a third aspect, an embodiment of this application further provides a method for processing a battery apparatus, where the battery apparatus includes multiple pouch cells, and electrode terminals respectively extend from two terminals of the pouch cell, where an extending direction of the electrode terminal is perpendicular to a thickness direction of the pouch cell; and the processing method includes the following steps: connecting the multiple pouch cells into a cell string along the extending direction of the electrode terminal, and dividing the cell string into multiple battery cell groups arranged sequentially in an arrangement direction of the pouch cells, where each battery cell group includes at least one pouch cell, and in each two adjacent pouch cells of the cell string, adjacent electrode terminals are connected to form a conductive structure; and bending the two conductive structures at two ends of each battery cell group towards opposite directions, so that the two battery cell groups connected to the battery cell group are stacked on two sides of the battery cell group in a thickness direction.

In the above technical solution, the grouping efficiency of the cell array is high, and the processing efficiency of the battery apparatus is also high.

In some embodiments, the connecting multiple pouch cells into a cell string along an extending direction of the electrode terminal specifically includes the following steps: laying the multiple pouch cells flat in a row along the extending direction of the electrode terminal; and connecting the electrode terminals at adjacent positions of each two adjacent pouch cells.

In the above technical solution, each two adjacent pouch cells of the multiple pouch cells in a row can be connected simultaneously, thereby improving processing efficiency.

In some embodiments, the connecting multiple pouch cells into a cell string along an extending direction of the electrode terminals specifically includes the following step: lap-connecting and welding the electrode terminals at the adjacent positions of each two adjacent pouch cells.

In the above technical solution, the grouping efficiency of the cell array is high, and the cell array supplies stable and reliable power.

### DESCRIPTION OF DRAWINGS

To describe the technical solutions in embodiments of this application more clearly, the following briefly describes the accompanying drawings required for describing some embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a schematic structural diagram of a battery apparatus according to some embodiments of this application;
FIG. 3 is a schematic diagram of a battery apparatus with a box cover plate hidden according to some embodiments of this application;
FIG. 4 is a schematic diagram of stacking of a battery cell group according to an embodiment of this application;
FIG. 5 is another schematic diagram of stacking of a battery cell group according to an embodiment of this application;
FIG. 6 is an enlarged view of part A circled in FIG. 5;
FIG. 7 is a schematic diagram of a cell array according to an embodiment of this application;
FIG. 8 is a schematic diagram of one processing state of the cell array shown in FIG. 7;
FIG. 9 is a schematic diagram of another processing state of the cell array shown in FIG. 7;
FIG. 10 is a schematic diagram of a pouch cell according to an embodiment of this application;
FIG. 11 is a schematic diagram of a battery apparatus according to an embodiment of this application;
FIG. 12 is a schematic diagram of another cell array according to an embodiment of this application;
FIG. 13 is a schematic diagram of one processing state of the cell array shown in FIG. 12;
FIG. 14 is a schematic diagram of another battery apparatus according to an embodiment of this application;
FIG. 15 is a schematic diagram of still another battery apparatus according to an embodiment of this application;
FIG. 16 is a partial schematic diagram of a cell array according to some embodiments of this application;
FIG. 17 is a partial schematic diagram of a cell array according to some other embodiments of this application;
FIG. 18 is a partial schematic diagram of a cell array according to still some other embodiments of this application;
FIG. 19 is a schematic diagram of a cell array and a mounting bracket according to some embodiments of this application;
FIG. 20 is an enlarged view of part C marked in FIG. 19;
FIG. 21 is an enlarged view of part B circled in FIG. 3;
FIG. 22 is a schematic diagram of cooperation between battery cell groups and reinforcing partitions according to some embodiments of this application;
FIG. 23 is a partially enlarged view of a pouch cell according to some embodiments of this application;
FIG. 24 is a partially enlarged view of a pouch cell according to some embodiments of this application;
FIG. 25 is a schematic diagram of a battery apparatus according to some embodiments of this application;
FIG. 26 is a cross-sectional view along E-E shown in FIG. 25;
FIG. 27 is an enlarged view of part D marked in FIG. 26;
FIG. 28 is a partial schematic diagram of a battery apparatus according to some embodiments of this application;
FIG. 29 is a flowchart of a processing step of a battery apparatus according to some embodiments of this application;
FIG. 30 is a flowchart of a processing step of a battery apparatus according to some embodiments of this application; and
FIG. 31 is a flowchart of a processing step of a battery apparatus according to some embodiments of this application.

Reference signs:
vehicle 1000;
battery apparatus 100; battery cell module 101;
cell array 10; first cell array 10A; second cell array 10B;
first direction F1; second direction F2; third direction F3; first reserved space S1; second reserved space S2;
battery cell group 1X; first border 1X1; second border 1X2;
upstream battery cell group 1A; intermediate battery cell group 1B; first terminal 1B1; second terminal 1B2; downstream battery cell group 1C;
first battery cell group 1Xa; first lead-out portion 1211; extension section 12111; bending section 12112; lap section 12113;
second battery cell group 1Xb; second lead-out portion 1212;
pouch cell 1;
pouch shell 11; membrane portion 111; edge sealing structure 112;
electrode terminal 12; lead-out portion 121; adapter piece 122;
reinforcing partition 2; connecting portion 23; first edge 231; buffer element 3;
conductive structure 4; inter-array conductive structure 41;
flexible bent conductive structure 5; first conductive structure 51; second conductive structure 52;
connecting plate 6;
box 20;
box body 7; cover plate 71; bottom plate 711; top plate 712;
mounting bracket 8; second edge 83; glue blocking strip 9;
heat exchange plate 30; controller 200; motor 300.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise explicitly specified and limited, the terms "mount", "connect", "link", and "attach" should be understood in a broad sense, for example, they can refer to a direct connection or an indirect connection through an intermediate medium. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

In the currently used traction batteries, some traction batteries use pouch cells. The pouch cell includes a pouch shell and an electrode assembly disposed inside the pouch shell. The pouch cell has electrode terminals connected to the electrode assembly and at least partially located outside the pouch shell. Different pouch cells are connected in series or parallel through the conductive connections between the electrode terminals. Typically, the electrode terminals that require conductive connection are welded onto a same conductive bracket, implementing conductive connection between multiple electrode terminals through the conductive bracket. However, the operation space for welding the electrode terminals to the conductive bracket is small, making the operation more difficult. After welding, it is difficult to inspect the welding quality, and positions with poor welding quality are hard to repair, resulting in low productivity and reliability of the traction batteries. Moreover, the introduction of the conductive bracket increases the number of components, leading to increased weight and cost of the traction battery. The conductive bracket also occupies space within the traction battery, affecting the energy density of the traction battery.

In view of this, this application proposes a battery apparatus using pouch cells. During production, multiple pouch cells can be lined up in a row, and then electrode terminals of each two adjacent pouch cells are connected to form a flexible conductive structure. The adjacent pouch cells are divided into one battery cell group, and the flexible conductive structures at two ends of the battery cell group are bent in opposite directions to form flexible bent conductive structures, so that multiple battery cell groups can be stacked in a thickness direction of the pouch cells.

As a result, the grouping efficiency of pouch cells in the battery apparatus according to embodiments of this application is high, significantly improving the production efficiency of the battery apparatus. Moreover, since the conductive bracket is eliminated, the operation space for welding the electrode terminals of adjacent pouch cells becomes larger, thereby reducing the difficulty of the welding operation. Additionally, the welding quality is easy to inspect, and the welding position is easy to repair, enhancing the reliability of the battery apparatus. Furthermore, since the conductive bracket is eliminated, the number of components is reduced, reducing the weight and cost of the battery apparatus. Also, the space occupied by the conductive bracket is saved, which is beneficial for increasing the energy density of the battery apparatus.

The technical solutions described in the embodiments of this application are applicable to a battery apparatus including pouch cells and an electric apparatus using such battery apparatus.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as an example for description of the following embodiments.

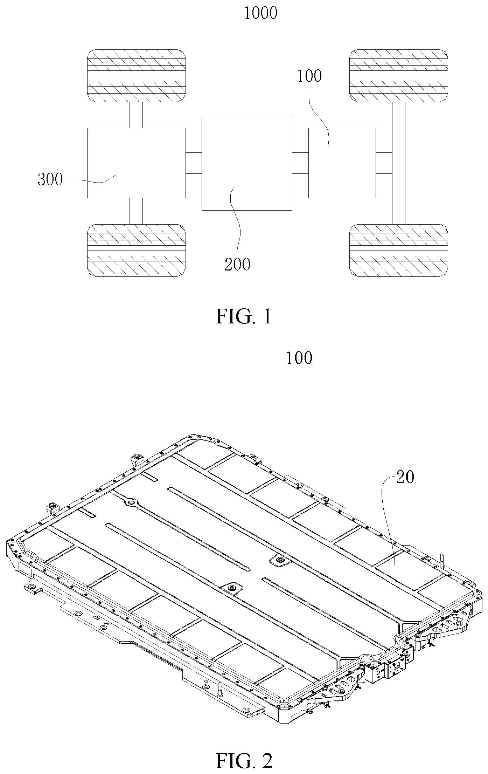

Referring to FIG. 1, FIG. 1 is a schematic structural diagram of a vehicle 1000 according to some embodiments of this application. The vehicle 1000 is provided with a battery apparatus 100, where the battery apparatus 100 may be disposed at the bottom, front, or rear of the vehicle 1000. The battery apparatus 100 may be configured to supply power to the vehicle 1000. For example, the battery apparatus 100 may be used as an operational power source for the vehicle 1000.

The vehicle 1000 may further include a controller 200 and a motor 300, where the controller 200 is configured to control the battery apparatus 100 to supply power to the motor 300, for example, to satisfy power needs of start, navigation, and driving of the vehicle 1000. In some embodiments of this application, the battery apparatus 100 can be used as not only the operational power source for the vehicle 1000 but also a driving power source for the vehicle 1000, replacing all or part of the fossil fuel or the natural gas to provide driving power for the vehicle 1000.

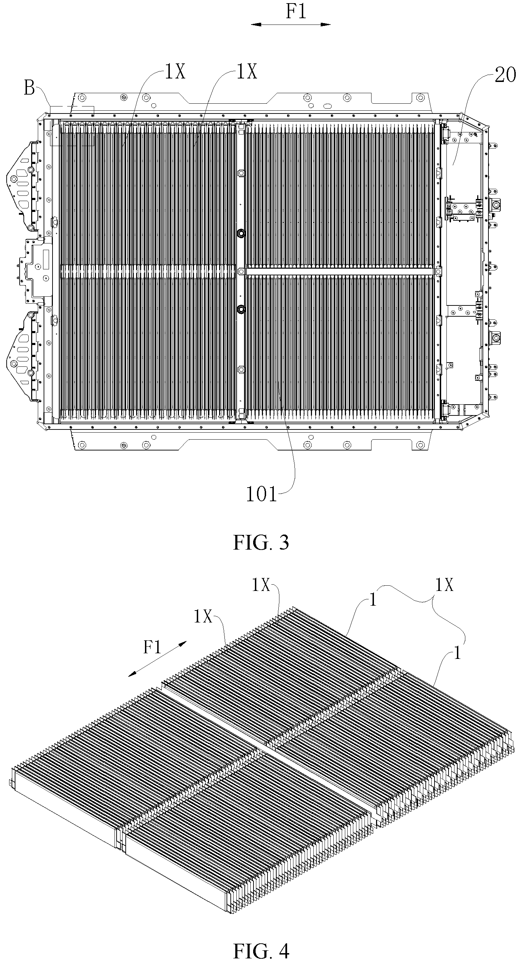

Referring to FIG. 2 and FIG. 3, FIG. 2 is a schematic structural diagram of a battery apparatus 100 according to some embodiments of this application, and FIG. 3 is a schematic diagram of a battery apparatus 100 with a box cover plate hidden according to some embodiments of this application. As shown in FIG. 2 and FIG. 3, the battery apparatus 100 may include a box 20 and a pouch cell 1 disposed inside the box 20. The pouch cell 1 is provided in plurality, and the plurality of pouch cells 1 may be connected in series, parallel, or series-parallel. Being connected in series-parallel means a combination of series and parallel connections of the plurality of pouch cells 1.

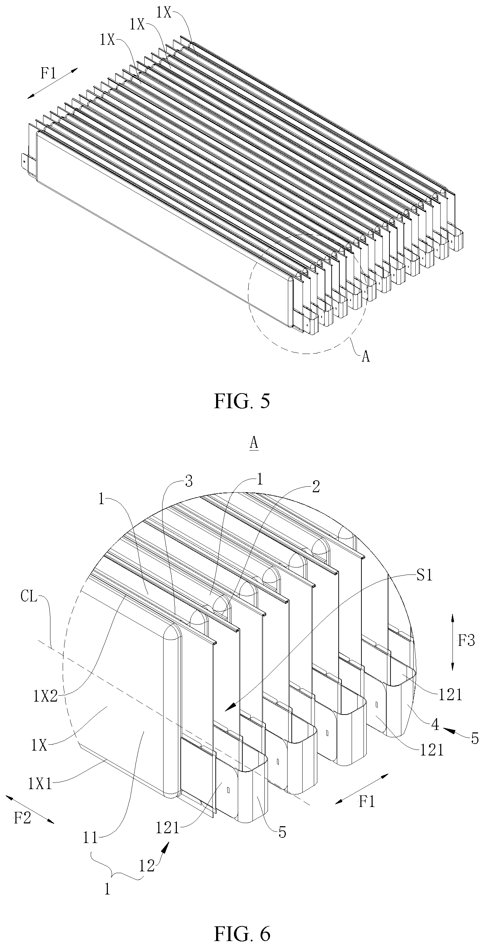

According to a first aspect, an embodiment of this application provides a battery apparatus 100. Still referring to FIG. 2 and FIG. 3, with reference to FIG. 4 and FIG. 5, FIG. 4 is a schematic diagram of stacking of a battery cell group 1X according to an embodiment of this application, and FIG. 5 is another schematic diagram of stacking of a battery cell group 1X according to an embodiment of this application. The battery apparatus 100 includes multiple battery cell groups 1X stacked in a first direction F1, where the first direction F1 is a thickness direction of each pouch cell 1. Each battery cell group 1X includes at least one pouch cell 1, that is, each battery cell group 1X includes one or more pouch cells 1. For example, in the embodiment shown in FIG. 4, each battery cell group 1X includes two pouch cells 1. For another example, in the embodiment shown in FIG. 5, each battery cell group 1X includes one pouch cell 1.

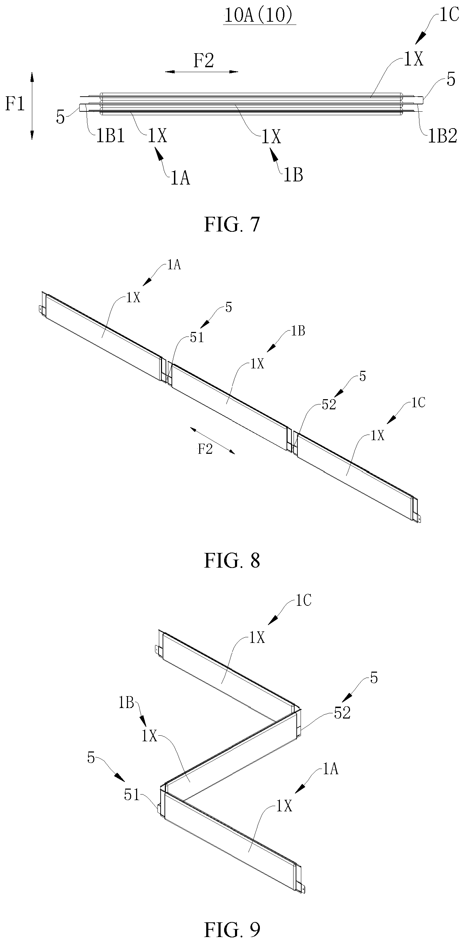

With reference to FIG. 6 to FIG. 9, FIG. 6 is an enlarged view of part A circled in FIG. 5; FIG. 7 is a schematic diagram of a cell array 10 according to an embodiment of this application; FIG. 8 is a schematic diagram of one processing state of the cell array 10 shown in FIG. 7; and FIG. 9 is a schematic diagram of another processing state of the cell array 10 shown in FIG. 7. Each battery cell group 1X located between two ends in the first direction F1 has one terminal in a second direction F2 electrically connected to the battery cell group 1X upstream in the first direction F1, and the other terminal in the second direction F2 electrically connected to the battery cell group 1X downstream in the first direction F1. A flexible bent conductive structure 5 is formed at a connection position of the two interconnected battery cell groups 1X.

The first direction F1 and the second direction F2 are arranged at an angle. For example, the first direction F1 and the second direction F2 intersect at a right angle, or intersect at an acute angle, or intersect at an obtuse angle. For example, the first direction F1 is a thickness direction of each pouch cell 1, and the second direction F2 is a length direction of each pouch cell 1. In this case, the first direction F1 and the second direction F2 intersect at a right angle. However, this application is not limited thereto. For example, in other embodiments of this application, the second direction F2 may alternatively be a width direction of at least one pouch cell 1, or the like.

Additionally, it should be noted that "upstream" and "downstream" refer to the two sides of the battery cell group 1X along the first direction F1. To be specific, one side of the battery cell group 1X along the first direction F1 is the upstream, and the other side of the battery cell group 1X along the first direction F1 is the downstream. However, "upstream" and "downstream" are not limited to specific sides of the battery cell group 1X; they are only used to indicate the two sides of the battery cell group 1X along the first direction F1.

In the above technical solution, among the multiple battery cell groups 1X stacked in the first direction F1, any battery cell group 1X other than the two battery cell groups 1X located at two ends in the first direction F1 can serve as an intermediate battery cell group 1B. In other words, among the multiple battery cell groups 1X stacked in the first direction F1, any battery cell group 1X sandwiched between two battery cell groups 1X can serve as an intermediate battery cell group 1B. Two terminals of the intermediate battery cell group 1B in the second direction F2 are a first terminal 1B1 and a second terminal 1B2. The two battery cell groups 1X adjacent to the intermediate battery cell group 1B are respectively the upstream battery cell group 1A and the downstream battery cell group 1C. The upstream battery cell group 1A is located upstream of the intermediate battery cell group 1B, and the downstream battery cell group 1C is located downstream of the intermediate battery cell group 1B. The upstream battery cell group 1A has a terminal closer to the first terminal 1B1 in the second direction F2 electrically connected to the first terminal 1B1 via a flexible bent conductive structure 5, and the downstream battery cell group 1C has a terminal closer to the second terminal 1B2 in the second direction F2 electrically connected to the second terminal 1B2 via a flexible bent conductive structure 5.

With reference to FIG. 7 to FIG. 9, for example, during processing, the upstream battery cell group 1A, the intermediate battery cell group 1B, and the downstream battery cell group 1C can be arranged in a row along the second direction F2, so that the upstream battery cell group 1A, the intermediate battery cell group 1B, and the downstream battery cell group 1C are sequentially placed in a flat state along the second direction F2 (as shown in FIG. 8). Adjacent positions of the upstream battery cell group 1A and the intermediate battery cell group 1B are connected to obtain a first conductive structure 51, and adjacent positions of the intermediate battery cell group 1B and the downstream battery cell group 1C are connected to obtain a second conductive structure 52. The first conductive structure 51 and the second conductive structure 52 are bent in opposite directions (as shown in FIG. 9). For example, when the first direction F1 is a front-back direction, the first conductive structure 51 is bent forward to form a flexible bent conductive structure 5, and the second conductive structure 52 is bent backward to form another flexible bent conductive structure 5. This allows the upstream battery cell group 1A to be stacked in front of the intermediate battery cell group 1B, and the downstream battery cell group 1C to be stacked behind the intermediate battery cell group 1B, so that the upstream battery cell group 1A, the intermediate battery cell group 1B, and the downstream battery cell group 1C are sequentially stacked in the first direction F1 (as shown in FIG. 7).

Therefore, each two adjacent battery cell groups 1X are connected together, and the connection position is bent to implement stacking of the two adjacent battery cell groups 1X in the first direction F1. Then, one terminal of the battery cell group 1X in the second direction F2 is electrically connected to the battery cell group 1X upstream in the first direction F1, and the other terminal of the battery cell group 1X in the second direction F2 is electrically connected to the battery cell group 1X downstream in the first direction F1. This can effectively improve the grouping efficiency, thereby improving the production efficiency of the battery apparatus 100. Moreover, since the connection of adjacent battery cell groups 1X does not require a conductive bracket, the operation space for connecting adjacent battery cell groups 1X is relatively large, thereby reducing the difficulty of the connection operation. Additionally, the connection quality is easy to inspect, and the connection position is easy to repair, thereby enhancing the reliability of the battery apparatus 100. Furthermore, since the conductive bracket is eliminated, the number of components is reduced, reducing the weight and cost of the battery apparatus 100. Also, the space occupied by the conductive bracket is saved, which is beneficial for increasing the energy density of the battery apparatus 100.

For example, referring to FIG. 6, the pouch cell 1 includes a pouch shell 11, an electrode assembly, and an electrode terminal 12, where the electrode terminal 12 is electrically connected to the electrode assembly inside the pouch shell 11. The housing of the pouch cell 1 is the pouch shell 11, and a material of the pouch shell 11 is not limited, for example, it may be aluminum plastic film. The electrode assembly may include positive and negative electrode plates. At least part of the electrode terminal 12 is exposed outside the pouch shell 11. In other words, the entire electrode terminal 12 may be exposed outside the pouch shell 11, or only part of the electrode terminal 12 may be exposed outside the pouch shell 11. In this application, the part of the electrode terminal 12 exposed outside the pouch shell 11 is used as a lead-out portion 121. The lead-out portion 121 is configured to connect pouch cells 1, that is, different pouch cells 1 are electrically connected through direct or indirect connection between lead-out portions 121, thereby implementing series and/or parallel connection among multiple pouch cells 1.

The electrode terminals 12 of two pouch cells 1 are connected together to form a conductive structure 4, that is, the lead-out portions 121 of two pouch cells 1 are directly or indirectly connected together to form a conductive structure 4. The conductive structure 4 at the end of the battery cell group 1X in the second direction F2 is arranged in a flexibly deformable form and is bent to form a flexible bent conductive structure 5. This allows the two battery cell groups 1X connected by this flexible bent conductive structure 5 to move relative to each other into a stacked state along the first direction F1. It should be noted that the "direct or indirect connection" mentioned in this application does not include integrated connection such as being integrally formed, but instead refers to two separate parts being connected together through processes such as welding or bonding.

In the embodiments of this application, the number of pouch cells 1 included in the battery cell group 1X is not limited. The battery cell group 1X includes one pouch cell 1 or multiple pouch cells 1. For example, each battery cell group 1X includes one pouch cell 1. For another example, each battery cell group 1X includes multiple pouch cells 1. For another example, at least one battery cell group 1X includes one pouch cell 1, and at least one another battery cell group 1X includes multiple pouch cells 1.

In some embodiments of this application, a thickness direction of the pouch cell 1 is the first direction F1, and the battery cell group 1X includes one pouch cell 1 or multiple pouch cells 1 laid flat on a plane perpendicular to the first direction F1. The battery cell group 1X including one pouch cell 1 is defined as a first battery cell group, and the battery cell group 1X including multiple pouch cells 1 is defined as a second battery cell group. The multiple pouch cells 1 in the second battery cell group are laid flat on the plane perpendicular to the first direction F1.

Since the multiple pouch cells 1 in the second battery cell group are laid flat on the plane perpendicular to the first direction F1, indicating that any two pouch cells 1 in the second battery cell group are not stacked along the first direction F1, there is no need to bend the connection position between any two adjacent pouch cells 1 in the second battery cell group. This can reduce process steps and improve production efficiency.

In this way, since the thickness direction of the pouch cell 1 is the first direction F1, a thickness of the first battery cell group along the first direction F1 is a thickness of a single pouch cell 1, and a thickness of the second battery cell group along the first direction F1 is consistent with a thickness of the thickest pouch cell 1 in the second battery cell group.

Therefore, in the multiple battery cell groups 1X stacked in the first direction F1, whether they are all first battery cell groups, all second battery cell groups, or a combination of the first battery cell group and second battery cell group, a total thickness of the multiple battery cell groups 1X stacked in the first direction F1 is relatively small in the first direction F1, occupying small space. Moreover, the flexible bent conductive structure 5 is bent in the thickness direction of the pouch cell 1, so the flexible bent conductive structure 5 requires a short length, making it less prone to breaking and ensuring reliable conductivity.

Certainly, this application is not limited thereto. In other embodiments of this application, a length or width direction of the pouch cell 1 may alternatively be set as the first direction F1.

Certainly, this application is not limited thereto. In other embodiments of this application, when the battery cell group 1X includes multiple pouch cells 1, at least two pouch cells 1 in the battery cell group 1X may be stacked in the first direction F1.

In some embodiments, the multiple pouch cells 1 laid flat in the battery cell group 1X are arranged in the second direction F2, and two adjacent pouch cells 1 are connected at adjacent positions. Therefore, during processing, multiple pouch cells 1 can be arranged in a row along the second direction F2, with each two adjacent pouch cells 1 connected at adjacent positions. This allows for folding by group, enabling multiple battery cell groups 1X to be stacked in the first direction F1. In the above technical solution, rapid grouping can be implemented, improving the production efficiency.

For example, in some embodiments, referring to FIG. 7 to FIG. 9, the battery apparatus 100 may include a first cell array 10A, the first cell array 10A includes the multiple battery cell groups 1X stacked in the first direction F1, and each battery cell group 1X in the first cell array 10A includes one pouch cell 1.

As a result, the structure of the first cell array 10A is simple, improving the grouping efficiency. Moreover, operation space for connecting two adjacent battery cell groups 1X can be increased, reducing the operation difficulty of connecting two adjacent battery cell groups 1X. Additionally, the connection quality is easy to inspect, and the connection position is easy to repair, thereby enhancing the productivity and reliability of the battery apparatus 100.

For example, with reference to FIG. 7 to FIG. 9, during production of the first cell array 10A, multiple pouch cells 1 can be sequentially arranged in a flattened form along the second direction F2 (as shown in FIG. 8), then electrode terminals 12 of each two adjacent pouch cells 1 can be directly or indirectly connected together to obtain a conductive structure 4, and next, each conductive structure 4 can be bent into a flexible bent conductive structure 5, so that each two adjacent pouch cells 1 change from a flat state to a stacked state. This changes the multiple pouch cells 1 from a flat state to a form of being connected end to end in a Z shape and stacked along the first direction F1.

In this way, the operation space for connecting electrode terminals 12 of two pouch cells 1 can be increased, reducing the operation difficulty of connecting the electrode terminals 12 of two pouch cells 1. Additionally, the connection quality is easy to inspect, and the connection position is easy to repair, thereby enhancing the productivity and reliability of the battery apparatus 100, and implementing high grouping efficiency for the first cell array 10A.

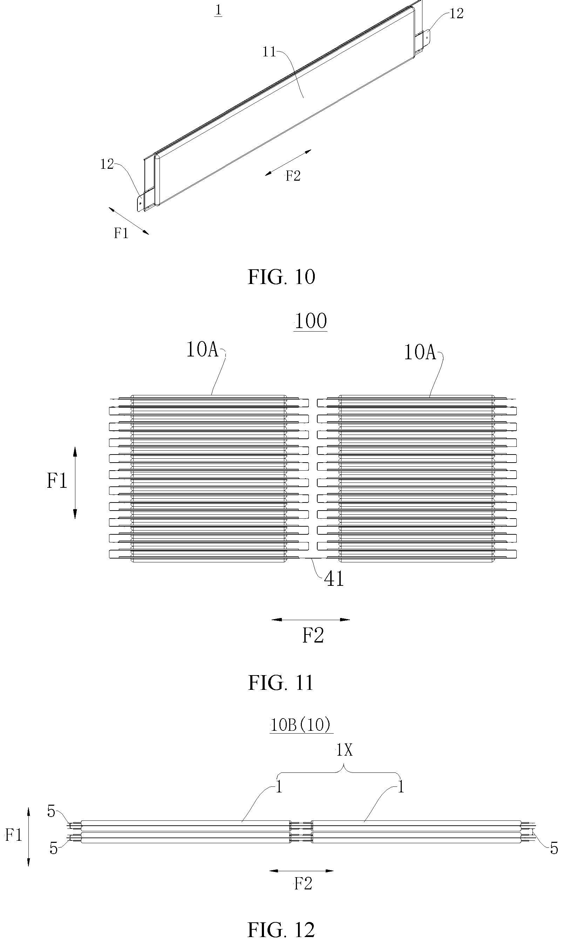

For example, in some embodiments, referring to FIG. 10, FIG. 10 is a schematic diagram of a pouch cell according to an embodiment of this application. The first direction F1 is the thickness direction of the pouch cell 1, the second direction F2 is the length direction of the pouch cell 1, and same-side terminals of two adjacent pouch cells 1 are connected by the flexible bent conductive structure 5.

In the above technical solution, the first direction F1 is set to the thickness direction of the pouch cell 1, the second direction F2 is set to the length direction of the pouch cell 1, the same-side terminals of two adjacent pouch cells 1 in the length direction are connected by the flexible bent conductive structure 5, and two adjacent pouch cells 1 are stacked in the thickness direction. This facilitates both the connection of two adjacent pouch cells 1 and the bending of the flexible bent conductive structure 5, reducing the processing difficulty of the first cell array 10A, reducing the length of the flexible bent conductive structure 5, and lowering the costs.

For example, the first direction F1 is the thickness direction of the pouch cell 1, the second direction F2 is the length direction of the pouch cell 1, the electrode terminals 12 extend from the two terminals of the pouch cell 1 in the length direction, and the same-side electrode terminals 12 of two adjacent pouch cells 1 are directly or indirectly connected to form the flexible bent conductive structure 5.

In this way, the first direction F1 is set to the thickness direction of the pouch cell 1, the second direction F2 is set to the length direction of the pouch cell 1, and the electrode terminals 12 are arranged as extending from the two terminals of the pouch cell 1 in the length direction, thereby reducing the processing difficulty of the pouch cell 1. Such design also allows the two terminals of the pouch cell 1 in the length direction to be easily connected to the corresponding side end portions of the adjacently stacked pouch cells 1 through the flexible bent conductive structures 5, reducing the length of the flexible bent conductive structure 5, thereby lowering the costs.

In some embodiments, referring to FIG. 7, each pouch cell 1 in the first cell array 10A has a same length, and each pouch cell 1 has a same width. The specifications of multiple pouch cells 1 can be almost identical, which is beneficial for the processing of pouch cells 1. Moreover, during arrangement, there is no need to consider that the difference in the shapes of different pouch cells 1 may affect the arrangement, thereby improving production efficiency.

Such design also facilitates the alignment of centers of each two adjacent pouch cells 1 in the first cell array 10A. Herein, the "center" of the pouch cell 1 refers to an intersection of a length centerline and a width centerline of the pouch cell 1. In the first cell array 10A, each two adjacent pouch cells 1 are stacked along the first direction F1 with their centers aligned, ensuring that the two side edges of each two adjacent pouch cells 1 in the width direction are respectively aligned to the two side edges in the length direction. As a result, the space occupied by all pouch cells 1 in the first cell array 10A in the length direction of the pouch cells 1 is consistent with the space occupied by one pouch cell 1 in the length direction, and the space occupied by all pouch cells 1 in the first cell array 10A in the width direction of the pouch cells 1 is consistent with the space occupied by one pouch cell 1 in the width direction. This greatly reduces the overall space occupation of the first cell array 10A in the length direction and width direction of the pouch cells 1, helping to increase the energy density of the battery apparatus.

Referring to FIG. 11, FIG. 11 is a schematic diagram of a battery apparatus according to an embodiment of this application. In some embodiments, when the second direction F2 is the length direction of the pouch cell 1, the battery apparatus 100 may include multiple first cell arrays 10A arranged in the second direction F2. In the above technical solution, when the overall spatial dimension of the battery apparatus 100 in the second direction F2 is large, the second direction F2 is set to the length direction of the pouch cell 1, and the battery apparatus 100 includes multiple first cell arrays 10A arranged in the second direction F2. This can reduce the length of a single pouch cell 1, lower the processing difficulty of a single pouch cell 1, and improve the structural strength and structural stability of a single pouch cell 1.

In some embodiments, referring to FIG. 10 and FIG. 11, two adjacent first cell arrays 10A arranged along the second direction F2 are connected by an inter-array conductive structure 41, allowing the adjacent first cell arrays 10A in the second direction F2 to be connected in series or in parallel. This can simplify the electrode output of multiple first cell arrays 10A, and also meet the power parameter design requirements of the battery apparatus 100.

For example, referring to FIG. 11, in two adjacent first cell arrays 10A arranged along the second direction F2, adjacent terminals of two battery cell groups 1X located at the ends in the first direction F1 and opposite in the second direction F2 are connected by an inter-array conductive structure 41. Therefore, the inter-array conductive structure 41 can be located at one end in the first direction F1 between the two first cell arrays 10A connected by it. This can reduce the length of the inter-array conductive structure 41, reduce costs, reduce the space occupation of the inter-array conductive structure 41 inside the battery apparatus 100, and increase the energy density of the battery apparatus 100.

For example, in two adjacent first cell arrays 10A arranged in the second direction F2, the electrode terminals 12 at the adjacent ends of the two battery cell groups 1X located at the ends in the first direction F1 and opposite in the second direction F2 are directly or indirectly connected to form the inter-array conductive structure 41, thereby facilitating processing.

Certainly, this application is not limited thereto. When a single pouch cell 1 has a relatively long length, for example, when the pouch cell 1 is in a blade form, the battery apparatus 100 may alternatively include only one first cell array 10A.

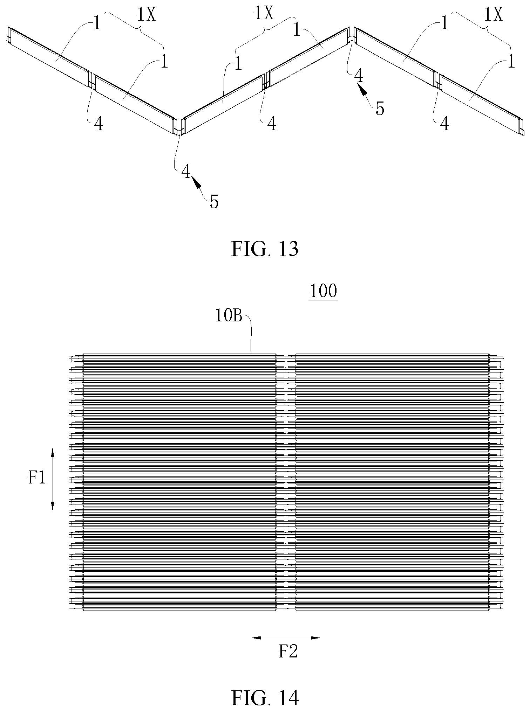

For example, in some other embodiments, referring to FIG. 12 and FIG. 13, FIG. 12 is a schematic diagram of another cell array according to an embodiment of this application; and FIG. 13 is a schematic diagram of one processing state of the cell array shown in FIG. 12. The battery apparatus 100 includes a second cell array 10B, where the second cell array 10B includes multiple battery cell groups 1X stacked in the first direction F1, and at least one battery cell group 1X in the second cell array 10B includes multiple pouch cells 1. This can reduce the number of flexible bent conductive structures 5, thereby reducing the number of times for bending the conductive structures 4, and improving the grouping efficiency of the second cell array 10B.

At least one battery cell group 1X in the second cell array 10B includes multiple pouch cells 1. For example, each battery cell group 1X in the second cell array 10B includes multiple pouch cells 1. For another example, several battery cell groups 1X in the second cell array 10B include multiple pouch cells 1 each, and several battery cell groups 1X in the second cell array 10B include only one pouch cell 1 each. When the battery cell group 1X includes multiple pouch cells 1, the conductive structures 4 connecting the multiple pouch cells 1 in pairs within the battery cell group 1X do not need to be bent.

For example, referring to FIG. 12 and FIG. 13, the first direction F1 is a thickness direction of the pouch cell 1, and all pouch cells 1 in the battery cell group 1X including the multiple pouch cells 1 are laid flat on a plane perpendicular to the first direction F1. In other words, any two pouch cells 1 in the battery cell group 1X including multiple pouch cells 1 are not stacked along the first direction F1. Therefore, there is no need to bend the connection position between two adjacent pouch cells 1 in a same battery cell group 1X. This can reduce process steps and improve production efficiency. In short, in the above technical solution, without the need for stacking along the first direction F1, multiple pouch cells 1 in the battery cell group 1X do not require additional bending steps, thereby improving grouping efficiency.

For example, referring to FIG. 12 and FIG. 13, the second direction F2 is a length direction of the pouch cell 1, the multiple pouch cells 1 included in the battery cell group 1X in the second cell array 10B are arranged along the second direction F2, and adjacent terminals of two adjacent pouch cells 1d are connected by a conductive structure 4, and the conductive structure 4 at the end of the battery cell group 1X in the second direction F2 is a flexible structure and is bent to form the flexible bent conductive structure 5.

Therefore, during production of the second cell array 10B, multiple pouch cells 1 can be sequentially arranged in a flattened form along the second direction F2, then adjacent terminals of each two adjacent pouch cells 1 can be connected (for example, adjacent electrode terminals 12 are directly or indirectly connected together) to obtain a conductive structure 4, and next, two conductive structures 4 at two ends of each battery cell group 1X in the second direction F2 are bent (as shown in FIG. 13) to form a flexible bent conductive structure 5, so that each two adjacent battery cell groups 1X change from a flat state to a stacked state. This changes the multiple battery cell groups 1X from a flat state to a form of being connected end to end in a Z shape and stacked along the first direction F1, thereby implementing a high grouping efficiency for the second cell array 10B.

In the above technical solution, the first direction F1 is set to the thickness direction of the pouch cell 1, the second direction F2 is set to the length direction of the pouch cell 1, multiple pouch cells 1 included in the battery cell group 1X in the second cell array 10B are arranged along the second direction F2, adjacent terminals of two adjacent pouch cells 1d are connected by a conductive structure 4, and the conductive structure 4 located at the end of the battery cell group 1X in the second direction F2 is a flexible structure and is bent to form the flexible bent conductive structure 5. Such design improves the grouping efficiency of the second cell array 10B and reduces the length of the conductive structure 4 and the flexible bent conductive structure 5, thereby saving costs.

In some embodiments, when multiple pouch cells 1 included in the battery cell group 1X in the second cell array 10B are arranged in the second direction F2, each battery cell group 1X in the second cell array 10B has a consistent total length in the second direction F2. It should be noted that the number of pouch cells 1 included in each battery cell group 1X in the second cell array 10B can be the same or different, for example, it can be one or multiple. When the battery cell group 1X includes only one pouch cell 1, the total length of the battery cell group 1X in the second direction F2 is a length of a single pouch cell 1. When the battery cell group 1X includes multiple pouch cells 1 arranged in the second direction F2, the total length of the battery cell group 1X in the second direction F2 is slightly greater than a sum of lengths of the multiple individual pouch cells 1 included in the battery cell group 1X. In this way, the space occupied by all battery cell groups 1X in the second cell array 10B along the second direction F2 is consistent with the space occupied by a single battery cell groups 1X in the second direction F2. This can reduce the space occupation in the second direction F2, helping to increase the energy density of the battery apparatus 100.

It should be noted that the number of pouch cells 1 included in each battery cell group 1X in the second cell array 10B can be the same or different, the arrangement of multiple pouch cells 1 included in each battery cell group 1X in the second cell array 10B can be the same or different, and the shape of each pouch cell 1 in the second cell array 10B can be the same or different.

For example, referring to FIG. 12 and FIG. 13, each battery cell group 1X in the second cell array 10B includes pouch cells 1 in a same shape, a same arrangement, and a same quantity. In other words, all pouch cells 1 in the second cell array 10B are identical in appearance (that is, in shape and size), the quantity of pouch cells 1 included in each battery cell group 1X in the second cell array 10B is the same, and the arrangement of multiple pouch cells 1 in each battery cell group 1X is the same. Therefore, the multiple battery cell groups 1X are identical in appearance, which facilitates batch production of battery cell groups 1X. Moreover, during arrangement, there is no need to consider that the difference in the shapes of different pouch cells 1 may affect the arrangement, thereby improving production efficiency. Additionally, during bending of the conductive structures 4, grouping pouch cells 1 of an equal quantity can prevent issues of miscounting.

Moreover, this design facilitates projection overlapping in the first direction F1 after the multiple battery cell groups 1X in the second cell array 10B are stacked, ensuring that the edges of each two adjacent cell groups 1X in the second cell array 10B are aligned. As a result, the second cell array 10B formed by stacking such multiple battery cell groups 1X in the first direction F1 occupies the same space perpendicular to the first direction F1 as a single battery cell group 1X in the second cell array 10B does, thereby reducing the overall space occupation of the second cell array 10B in a direction perpendicular to the first direction F1, and increasing the energy density of the battery apparatus 100. Furthermore, this design helps achieve specification consistency for the flexible bent conductive structures 5 in the second cell array 10B, instead of some being longer and some being shorter. This facilitates processing and batch production, and makes it easier to control the overall conductive performance of the battery apparatus 100.

Moreover, when the overall spatial dimension of the battery apparatus 100 in the second direction F2 is large, the second direction F2 is set to the length direction of the pouch cell 1, and the multiple pouch cells 1 included in the battery cell group 1X in the second cell array 10B are arranged along the second direction F2, allowing the battery apparatus 100 to be configured with only one second cell array 10B in the second direction F2 (as shown in FIG. 14, which is a schematic diagram of a battery apparatus according to an embodiment of this application). This can reduce the length of a single pouch cell 1, and lower the processing difficulty of a single pouch cell 1. Furthermore, this design facilitates the electrode output of the battery apparatus 100, that is, the electrode output can be implemented at the end portions, which are far away from each other along the second direction F2, of the two battery cell groups 1X at two ends of the second cell array 10B in the first direction F1. Certainly, this application is not limited thereto. For example, in other embodiments of this application, the battery apparatus 100 may alternatively be configured with multiple second cell arrays 10B in the second direction F2 (this embodiment is not shown in the figure).

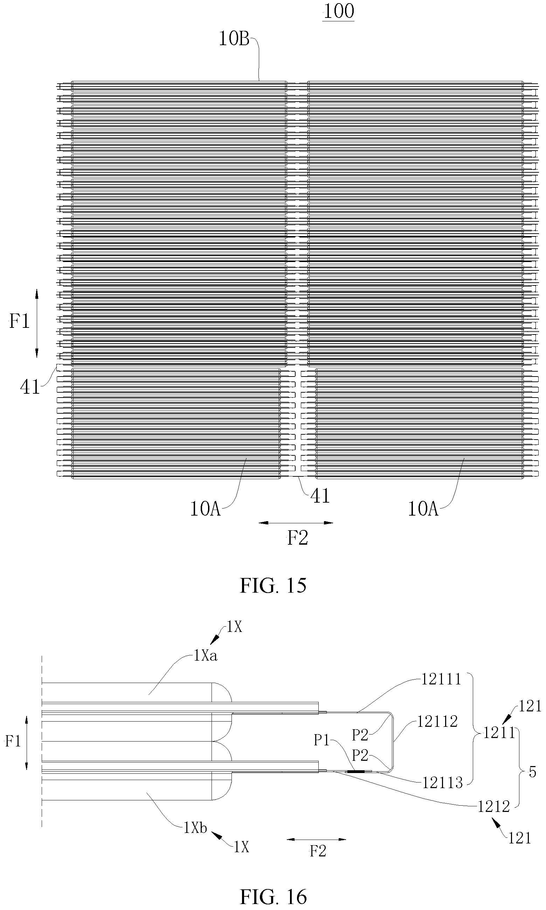

Additionally, in some embodiments of this application, the battery apparatus 100 may include both a first cell array 10A and a second cell array 10B (for example, as shown in FIG. 15, which is a schematic diagram of another battery apparatus according to an embodiment of this application). The relative arrangement of the first cell array 10A and the second cell array 10B is not limited, for example, they can be arranged along the first direction F1. The adjacent end portions of the first cell array 10A and the second cell array 10B can alternatively be connected by the inter-array conductive structure 41, thereby simplifying the electrode output and implementing series and parallel connections.

In some embodiments of this application, with reference to FIG. 6, the pouch cell 1 includes a pouch shell 11 and an electrode terminal 12, the electrode terminal 12 is connected to an electrode assembly inside the pouch shell 11, and includes a lead-out portion 121 extending out of the pouch shell 11, adjacent lead-out portions 121 of adjacent pouch shells 11 are directly or indirectly connected to form a conductive structure 4, and the conductive structure 4 at the end of the battery cell group 1X in the second direction F2 is a flexible structure and is bent to form the flexible bent conductive structure 5.

In other words, two adjacent pouch cells 1, whether in the first direction F1 or in the second direction F2, can have the electrode terminals 12 on the adjacent sides connected together to form the conductive structure 4. It is not required that every conductive structure 4 be flexibly deformable, but the conductive structure 4 located at the end of the battery cell group 1X in the second direction F2 and used to connect two adjacent battery cell groups 1X needs to have the capability of flexible deformation, enabling it to form a flexible bent conductive structure 5 through its flexible deformation. For example, in combination with FIG. 13, when the battery cell group 1X includes multiple pouch cells 1, the conductive structure 4 connecting adjacent pouch cells 1 within the same battery cell group 1X may have the capability for flexible deformation or may not have the capability for flexible deformation.

In this way, the electrode terminals 12 of two pouch cells 1 can be directly or indirectly connected, so as to obtain a conductive structure 4 including at least two electrode terminals 12 after the connection. Two pouch cells 1 are electrically connected the conductive structure 4. At least the conductive structure 4 located at the end of the battery cell group 1X in the second direction F2 is capable of flexible bending deformation, so that a flexible bent conductive structure 5 can be obtained through its bending deformation. This allows the two battery cell groups 1X connected by the flexible bent conductive structure 5 to move relative to each other to change their relative positions, turning the two battery cell groups 1X into a stacked state along the first direction F1.

It should be noted that the relative positions of the connected electrode terminals 12 of two pouch cells 1 can be in a flat state, but are not limited to a flat state. For example, they may be arranged at an angle, for example, one side surface of one pouch cell 1 in the thickness direction forming a large acute angle, or a right angle, or an obtuse angle with one side surface of another pouch cell 1 in the thickness direction. This can also increase the operation space for connecting the electrode terminals 12 of two pouch cells 1, reducing the operation difficulty of connecting the electrode terminals 12 of two pouch cells 1. Additionally, the connection quality is easy to inspect, and the connection position is easy to repair, thereby enhancing the productivity and reliability of the battery apparatus 100.

In this way, two battery cell groups 1X only need to be connected, and then turned into a stacked state through the bending deformation of the conductive structure 4. During the connection of the two battery cell groups 1X, they do not need to be in a stacked state. This can increase the operation space for connecting the electrode terminals 12 of two pouch cells 1, reducing the operation difficulty of connecting the electrode terminals 12 of two pouch cells 1. Additionally, the connection quality is easy to inspect, and the connection position is easy to repair, thereby enhancing the productivity and reliability of the battery apparatus 100. Furthermore, this connection mode eliminates the need for the rigid conductive bracket used in the related art for connecting two pouch cells, reducing the number of components, and reducing the weight and cost of the battery apparatus 100. Also, the space occupied by the conductive bracket is saved, which is beneficial for increasing the energy density of the battery apparatus 100.

In this way, the adjacent electrode terminals 12 of two adjacent pouch cells 1 are connected to form the conductive structure 4, and the conductive structure 4 located at the end of the battery cell group 1X in the second direction F2 is arranged as a flexible structure and bent to form the flexible bent conductive structure 5. This facilitates the processing of the conductive structure 4 and the flexible bent conductive structure 5, and helps reduce the lengths of the electrode terminals 12, the conductive structure 4, and the flexible bent conductive structure 5, thereby reducing production costs.

In some embodiments, with reference to FIG. 6 and FIG. 10, the second direction F2 is the length direction of the pouch cell 1, electrode terminals 12 extend from two terminals of the pouch cell 1 in the length direction, and adjacent pouch cells 1 are connected by the adjacent electrode terminals 12. In other words, for any two adjacent pouch cells 1, their adjacent electrode terminals 12 are directly or indirectly connected to implement the connection between these two pouch cells 1. The battery cell group 1X includes one pouch cell 1 or multiple pouch cells 1 arranged sequentially in the second direction F2.

For example, the length direction of the pouch cell 1 is the left-right direction, and the thickness direction of the pouch cell 1 is the front-back direction. During processing, multiple pouch cells 1 can be arranged in a row in the left-right direction, and each two adjacent electrode terminals 12 are connected to obtain the bent conductive structure 4. Then, the conductive structure 4 at the left end (or right end) of the battery cell group 1X is bent forward, and the conductive structure 4 at the right end (or left end) of the battery cell group 1X is bent backward, allowing multiple battery cell groups 1X to be stacked in the front-back direction. In this way, the electrode terminal 12 at the left end of one battery cell group 1X can be connected to the electrode terminal 12 at the left end of an adjacent battery cell group 1X in front of it (or behind it), and the electrode terminal 12 at the right end of this battery cell group 1X can be connected to the electrode terminal 12 at the right end of an adjacent battery cell group 1X behind it (or in front of it).

In the above technical solution, the electrode terminals 12 are arranged as extending from two terminals of the pouch cell 1 in the length direction, thereby reducing the processing difficulty of the pouch cell 1. Moreover, the second direction F2 is set to the length direction of the pouch cell 1, allowing one end in the second direction F2 of each battery cell group 1X located between two ends in the first direction F1 to be electrically connected to the battery cell group 1X upstream in the first direction F1 by the flexible bent conductive structure 5, and the other end in the second direction F2 to be electrically connected to the battery cell group 1X downstream in the first direction F1 by the flexible bent conductive structure 5. For example, during processing, multiple pouch cells 1 can first be lined up in the length direction of the pouch cells 1, each two adjacent electrode terminals 12 are connected to obtain the conductive structure 4, and then the conductive structure 4 is bent, so that the multiple pouch cells 1 can be divided into multiple battery cell groups 1X and the multiple battery cell groups 1X can be stacked in the thickness direction of the pouch cells 1. This can simplify processing, improve grouping efficiency, and reduce the length of the flexible bent conductive structure 5. Moreover, the bent conductive structure 4 only occupies the space on two sides of the pouch cell 1 in the length direction, and does not occupy the space on two sides of the pouch cell 1 in the width direction. When the pouch cells 1 are arranged in the width direction in a same way as those in the height direction, the height space occupied by the battery apparatus 100 can be reduced.

Certainly, this application is not limited thereto. The two electrode terminals 12 of the pouch cell 1 may alternatively be disposed at other positions of the pouch cell 1. For example, the two electrode terminals 12 of the pouch cell 1 may alternatively be disposed at two terminals of the pouch cell 1 in the width direction. For another example, one of the two electrode terminals 12 of the pouch cell 1 may be disposed at one end of the pouch cell 1 in the width direction, and the other may be disposed at one end of the pouch cell 1 in the length direction. Therefore, based on different distribution positions of the electrode terminals 12, the arrangement of multiple pouch cells 1 in the battery cell group 1X can be flexibly selected.

In some embodiments, referring to FIG. 7 to FIG. 9, FIG. 12, and FIG. 13, the first direction F1 is the thickness direction of the pouch cell 1, a width direction of the pouch cell 1 is a third direction F3, and projections of two adjacent battery cell groups 1X stacked in the first direction F1 overlap in the first direction F1.

In the above technical solution, since the first direction F1 is the thickness direction of the pouch cell 1, the space occupation in the first direction F1 after multiple battery cell groups 1X are stacked along the first direction F1 can be reduced. Moreover, the cell array 10 formed by stacking such multiple battery cell groups 1X in the first direction F1 occupies the same space perpendicular to the first direction F1 as a single battery cell group 1X in the cell array 10 does, thereby reducing overall space occupation of the cell array 10 in a direction perpendicular to the first direction F1, and increasing the energy density of the battery apparatus 100.

In some embodiments, referring to FIG. 16, FIG. 16 is a partial schematic diagram of a cell array according to some embodiments of this application. In the flexible bent conductive structure 5, the lead-out portions 121 from the two pouch cells 1 are lap-connected. In other words, the lead-out portion 121 of the pouch cell 1 in one battery cell group 1X is lap-connected to the lead-out portion 121 of the pouch cell 1 in the adjacent battery cell group 1X.

In this way, the two adjacent battery cell groups 1X can be connected through direct lap-connection of the lead-out portions 121 of the pouch cells 1. This allows for relatively large connection area for the two battery cell groups 1X, resulting in a more stable and reliable connection between the two battery cell groups 1X. Moreover, compared to indirect connection, direct connection can simplify the structure, reduce parts, and improve assembly efficiency, further enhancing grouping efficiency and increasing productivity.

For example, the lead-out portion 121 may be arranged as a metal sheet that can be bent to deform, allowing it to run through the bent or flexible bent conductive structure 5 for its lap-connected at least one lead-out portion 121. For example, the electrode terminal 12 may be a protruding part of an electrode plate in the electrode assembly, for example, an aluminum sheet or a copper sheet.

For example, referring to FIG. 16, the two lead-out portions 121 forming the lap connection are connected at a lap joint by welding or conductive adhesive. In this way, the operation is straightforward, and a stable and reliable electrical connection can be implemented.

For example, referring to FIG. 16, a lap-connection position P1 of the two lead-out portions 121 in the flexible bent conductive structure 5 does not overlap with a bending position P2 of the flexible bent conductive structure 5. In this way, the flexible bent conductive structure 5 can be easily bent, and the bending does not adversely affect the reliability and stability of the lap-connection between the lead-out portions 121, thereby enhancing the connection reliability and electrical connection stability between battery cell groups 1X.

In some embodiments of this application, referring to FIG. 16, the bending position P2 of the flexible bent conductive structure 5 is centered, and the lap-connection position P1 of the two lead-out portions 121 in the flexible bent conductive structure 5 is located on a side of the bending position P2 in the first direction F1 and opposite the corresponding battery cell group 1X in the second direction F2. In other words, along the extending direction of the flexible bent conductive structure 5, the bending position P2 of the flexible bent conductive structure 5 is at an equal distance to each battery cell group 1X. This is beneficial for enhancing the structural stability of the flexible bent conductive structure 5 and reducing the stress concentration of the flexible bent conductive structure 5.

In some embodiments of this application, referring to FIG. 16, the two lead-out portions 121 forming the lap connection in the flexible bent conductive structure 5 are a first lead-out portion 1211 and a second lead-out portion 1212, the battery cell group 1X with the first lead-out portion 1211 extending out is a first battery cell group 1Xa, the battery cell group 1X with the second lead-out portion 1212 extending out is a second battery cell group 1Xb, and the first battery cell group 1Xa and the second battery cell group 1Xb are adjacently stacked; a length of the first lead-out portion 1211 is greater than a length of the second lead-out portion 1212; the first lead-out portion 1211 includes an extension section 12111, a bending section 12112, and a lap section 12113, where the extension section 12111 is opposite the first battery cell group 1Xa in the second direction F2, the lap section 12113 is spaced from the extension section 12111 in the first direction F1, the lap section 12113 is opposite the second battery cell group 1Xb in the second direction F2, and the bending section 12112 is bent, with two ends respectively connected to the extension section 12111 and the lap section 12113; and the second lead-out portion 1212 is opposite the second battery cell group 1Xb in the second direction F2, and is lap-connected to the lap section 12113.

Therefore, it is easy to realize that the lap-connection position P1 of the two lead-out portions 121 in the flexible bent conductive structure 5 does not overlap with the bending position P2 of the flexible bent conductive structure 5, and the bending is also quite easy. It should be noted that for each two adjacent battery cell groups 1X along the first direction F1, either can be used as the first battery cell group 1Xa and the other as the second battery cell group 1Xb.

For example, the second direction F2 is the length direction of the pouch cell 1, and each pouch cell 1 has the first lead-out portion 1211 and the second lead-out portion 1212 respectively at two ends in the length direction. In this way, the two lead-out portions 121 of each pouch cell 1 in the length direction is arranged to be one long and one short. For example, the length direction of the pouch cell 1 is the left-right direction, the left lead-out portion 121 is shorter and the right lead-out portion 121 is longer. When multiple pouch cells 1 are arranged in a row in the length direction of the pouch cells 1, the above arrangement can be used to ensure that each two adjacent pouch cells 1 are connected by one long lead-out portion 121 and one short lead-out portion 121 at the connection part.

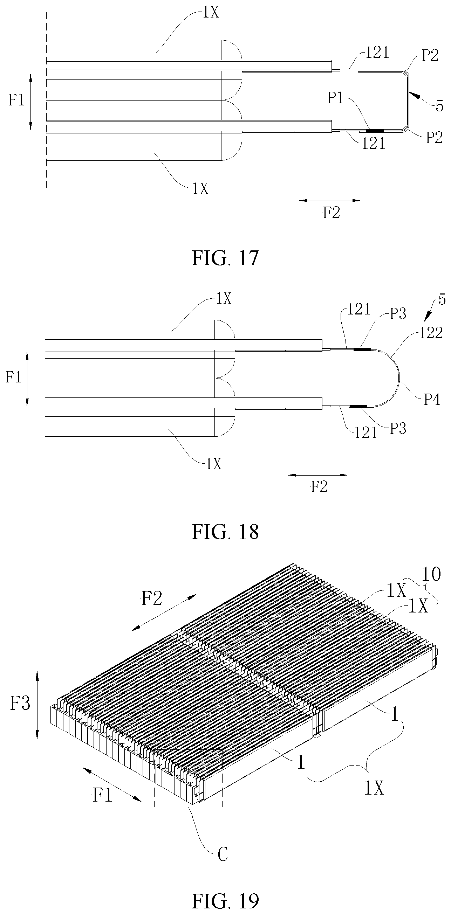

Certainly, this application is not limited thereto. Referring to FIG. 17, FIG. 17 is a partial schematic diagram of a cell array according to some other embodiments of this application. Two lead-out portions 121 forming the lap connection in the flexible bent conductive structure 5 may alternatively be set to a same length, and the bending position P2 of the flexible bent conductive structure 5 is located at a non-connected overlapping part of the two lead-out portions 121. Therefore, during production of pouch cells 1, the two lead-out portions 121 at two terminals of a pouch cell 1 can be cut to equal lengths. During arrangement of multiple pouch cells 1, there is no need to select the placement direction due to different lengths of the lead-out portions 121, thereby improving production efficiency.

In some embodiments, referring to FIG. 18, FIG. 18 is a partial schematic diagram of a cell array according to some embodiments of this application. In the flexible bent conductive structure 5, the lead-out portions 121 from the two pouch cells 1 are indirectly connected through an adapter piece 122. In other words, the lead-out portion 121 of the pouch cell 1 in one battery cell group 1X is lap-connected to the lead-out portion 121 of the pouch cell 1 in the adjacent battery cell group 1X.

In this way, the lead-out portions 121 of the two pouch cells 1 are connected through the adapter piece 122, thereby reducing the lengths of the lead-out portions 121, and reducing the processing difficulty of the pouch cells 1. Additionally, standardized adapter pieces 122 can be used for rapid and efficient connection processing, making the connection of multiple pouch cells 1 convenient and efficient, with consistent conductive performance across all flexible bent conductive structures 5.

At least one of the lead-out portion 121 and the adapter piece 122 forming the lap connection can be bent, so that the bending position P4 of the flexible bent conductive structure 5 is located at least one of the lead-out portion 121 and the adapter piece 122. For example, the adapter piece 122 is a metal sheet capable of bending deformation, enabling the flexible bent conductive structure 5 to be bent with the bending of the adapter piece 122. For another example, the lead-out portion 121 is a metal sheet capable of bending deformation, enabling the flexible bent conductive structure 5 to be bent through the bending of the lead-out portion 121.

In some embodiments of this application, referring to FIG. 18, the adapter piece 122 is lap-connected to the lead-out portion 121. In this way, the lap connection of the adapter piece 122 to the lead-out portion 121 allows for relatively large connection area between the adapter piece 122 and the lead-out portion 121, resulting in a stable and reliable connection between the two battery cell groups 1X. The specific lap-connection method of the adapter piece 122 and the lead-out portion 121 is not limited, for example, they may be lap-connected and bonded through conductive adhesive, or lap-connected and welded, or the like. This is easy to operate, and can also implement a stable and reliable electrical connection.

In some embodiments of this application, referring to FIG. 18, a lap-connection position P3 of the adapter piece 122 and the lead-out portion 121 does not overlap with a bending position P4 of the flexible bent conductive structure 5.

In other words, the flexible bent conductive structure 5 is not bent at the lap-connection position P3 of the adapter piece 122 and the lead-out portion 121. This makes it easy for the flexible bent conductive structure 5 to bend without adversely affecting the reliability and stability of the lap connection between the adapter piece 122 and the lead-out portion 121, thereby enhancing the connection reliability and electrical connection stability between the battery cell groups 1X.

In some embodiments of this application, referring to FIG. 18, the flexible bent conductive structure 5 is bent at the adapter piece 122, and the bending position P4 of the flexible bent conductive structure 5 is centered.

In other words, along the extending direction of the flexible bent conductive structure 5, the bending position P4 of the flexible bent conductive structure 5 is at an equal distance to each battery cell group 1X. This is beneficial for enhancing the structural stability of the flexible bent conductive structure 5 and reducing the stress concentration of the flexible bent conductive structure 5. Moreover, the adapter piece 122 can be relatively long, with one part used for lap-connection to the lead-out portion 121, and the rest part for bending, thereby simplifying the design of the lead-out portion 121 and further reducing the length of the lead-out portion 121.

In some embodiments of this application, referring to FIG. 16 to FIG. 18, the bending position of the flexible bent conductive structure 5 does not overlap with a conductive connection position of the two battery cell groups 1X in the flexible bent conductive structure 5. For example, as shown in FIG. 16 and FIG. 17, the bending position P2 does not overlap with the lap-connection position P1. For instance, as shown in FIG. 18, the bending position P4 does not overlap with the lap-connection position P3.

It should be noted that the connection of two battery cell groups 1X in the flexible bent conductive structure 5 is not limited to a direct lap-connection and an indirect connection via an adapter piece 122. For example, the connection can also be implemented through perforation or the like. However, conductivity is implemented at the connection position, implementing the electrical connection between two battery cell groups 1X through the flexible bent conductive structure 5. Hence, a position where connection is made and conductivity is established is the conductive connection position of the two battery cell groups 1X (for example, the lap-connection position P1 shown in FIGs. 16 and 17, and for another example, the lap-connection position P3 shown in FIG. 18).

In this way, the bending position of the flexible bent conductive structure 5 is set as not overlapping with the conductive connection position of the two battery cell groups 1X in the flexible bent conductive structure 5. This allows the flexible bent conductive structure 5 to be bent easily, and the bending does not adversely affect the connection reliability and stability of the two battery cell groups 1X in the flexible bent conductive structure 5, thereby enhancing the connection reliability and electrical connection stability between the battery cell groups 1X.

In some embodiments of this application, referring to FIG. 16 to FIG. 18, the bending corner position of the flexible bent conductive structure 5 (for example, the bending position P2 shown in FIG. 16 and FIG. 17, and for another example, the bending position P4 shown in FIG. 18) is a rounded corner. This can alleviate the issue of stress concentration at the bending position, thereby enhancing the connection reliability and conductive stability between two adjacent battery cell groups 1X.

The flexible bent conductive structure 5 is not limited to a specific form. For example, the flexible bent conductive structure 5 may be U-shaped, that is, the flexible bent conductive structure 5 may alternatively be formed as a U-shaped structure with two bending corners (as shown in FIG. 16 and FIG. 17), thereby saving space. For another example, the flexible bent conductive structure 5 may be C-shaped, that is, the flexible bent conductive structure 5 may be formed as a C-shaped structure with one bending corner (as shown in FIG. 18), thereby reducing processing difficulty.

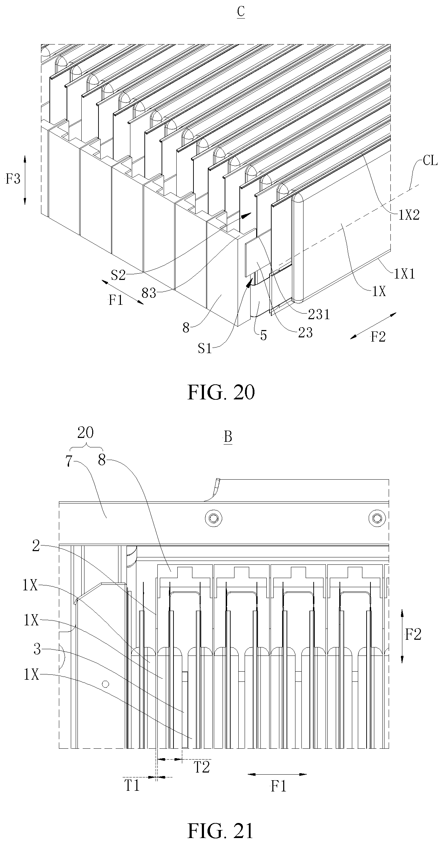

In some embodiments of this application, referring to FIG. 6, with reference to FIG. 19 and FIG. 20, FIG. 19 is a schematic diagram of a cell array and a mounting bracket according to some embodiments of this application; and FIG. 20 is an enlarged view of part C marked in FIG. 19. Two side borders of the battery cell group 1X in the third direction F3 are a first border 1X1 and a second border 1X2, and the flexible bent conductive structure 5 is arranged closer to the first border 1X1 than the second border 1X2 in the third direction F3, to create a first reserved space S1 on a side of the flexible bent conductive structure 5 closer to the second border 1X2.

The first direction F1, the second direction F2, and the third direction F3 are mutually perpendicular to each other. For example, the first direction F1 is the thickness direction of the pouch cell 1, the second direction F2 is the length direction of the pouch cell 1, and the third direction F3 is the width direction of the pouch cell 1.

In this way, the first reserved space S1 can be utilized to accommodate other components, fully utilizing the space in the third direction F3 where the flexible bent conductive structure 5 is disposed in the battery apparatus 100. This reduces the occupation of other spaces, thereby helping to increase the energy density of the battery apparatus 100.

In some embodiments of this application, with reference to FIG. 6 and FIG. 20, the flexible bent conductive structure 5 is located on a side, closer to the first border 1X1, of a centerline CL of the battery cell group 1X in the third direction F3. The centerline CL refers to a line having the same distance to the first border 1X1 and the second border 1X2 in the third direction F3.

Therefore, the dimension of the first reserved space S1 in the third direction F3 can exceed more than half of the dimension of the battery cell group 1X in the third direction F3, allowing the first reserved space S1 to accommodate more components, and making better use of the space in the third direction F2 where the flexible bent conductive structure 5 is disposed in the battery apparatus 100. This reduces the occupation of other spaces, thereby helping to increase the energy density of the battery apparatus 100.

In some embodiments of this application, with reference to FIG. 3, FIG. 20, and FIG. 21, FIG. 21 is an enlarged view of part B marked in FIG. 3. The battery apparatus 100 includes a box 20 for housing the pouch cell 1, and a reinforcing partition 2 is sandwiched between at least two adjacent battery cell groups 1X in the first direction F1, where a stiffness of the reinforcing partition 2 is greater than a stiffness of the pouch shell 11 of the pouch cell 1, the reinforcing partition 2 has a connecting portion 23 protruding from the battery cell group 1X in the second direction F2, and the connecting portion 23 extends into the first reserved space S1 and is connected to the box 20.

The reinforcing partition 2 may be sandwiched between each two adjacent battery cell groups 1X; or the reinforcing partition 2 may be sandwiched between some of the adjacent battery cell groups 1X, while the reinforcing partition 2 is not sandwiched between the rest of the adjacent battery cell groups 1X. The stiffness of the reinforcing partition 2 is greater than that of the pouch shell 11.

Therefore, with the characteristic that the stiffness of the reinforcing partition 2 is greater than the stiffness of the pouch shell 11, the reinforcing partition 2 can alleviate the deformation issue of the pouch cell 1. Moreover, through the connection of the reinforcing partition 2 to the box 20, the reinforcing partition 2 can more reliably and stably support the battery cell group 1X, enhancing the stability of the battery apparatus 100.

Additionally, since the reinforcing partition 2 is connected to the box 20 through the connecting portion 23 that extends into the first reserved space S1, the occupation of other spaces can be reduced, and the space saved in the third direction F3 by the flexible bent conductive structure 5 can be effectively utilized, thereby helping to increase in the energy density of the battery apparatus 100.

In the above solution, the pouch cell 1 itself may have a connection to the box 20, or may have no connection, for example, implementing a connection by glue filling, or the like.

In some embodiments of this application, with reference to FIG. 3, FIG. 20, and FIG. 21, the box 20 includes a box body 7 and a mounting bracket 8, where the mounting bracket 8 is installed inside the box body 7, the mounting bracket 8 is disposed on a side of the battery cell group 1X in the second direction F2, and the connecting portion 23 is connected to the mounting bracket 8.

In the above technical solution, the mounting bracket 8 is disposed inside the box body 7, and the reinforcing partition 2 is connected to the box 20 through the mounting bracket 8. This can reduce the difficulty of connecting the reinforcing partition 2 to the box 20, and implement flexible installation of the reinforcing partition 2 to the box 20. For example, the reinforcing partition 2 may be first installed on the mounting bracket 8, and then the mounting bracket 8 is installed into the box body 7. Alternatively, the mounting bracket 8 may be installed into the box body 7 first, and then the reinforcing partition 2 is connected to the mounting bracket 8. Additionally, the shape and position of the mounting bracket 8 can also be flexibly set to further reduce the difficulty of its connection to the reinforcing partition 2 and enhance the reliability of its connection to the reinforcing partition 2. Moreover, the material of the mounting bracket 8 can be flexibly selected to enhance the reliability and stability of the mounting bracket 8 in securing the cell array 10. Moreover, the mounting bracket 8 is disposed on a side of the battery cell group 1X in the second direction F2, allowing the connecting portion 23 of the reinforcing partition 2 that protrudes from the battery cell group 1X in the second direction F2 to easily approach the mounting bracket 8 and form a connection to the mounting bracket 8.

The manner for connecting the box body 7 and the mounting bracket 8 is not limited, and they may be detachably connected or non-detachably connected. A material of the mounting bracket 8 is not limited, and for example, may be a metal material, so as to improve connection strength. The manner for connecting the box body 7 and the mounting bracket 8 is not limited, for example, they may be screwed, riveted, welded, or the like.

In some embodiments of this application, with reference to FIG. 20, a side edge of the connecting portion 23 in the third direction F3 closer to the second border 1X2 is a first edge 231, a side edge of the mounting bracket 8 in the third direction F3 closer to the second border 1X2 is a second edge 83, both the first edge 231 and the second edge 83 are located on a side of the second border 1X2 closer to the first border 1X1, to enable the connecting portion 23 and the mounting bracket 8 to form a second reserved space S2 on a side far from the first border 1X1 in the third direction F3.

In the above technical solution, the second reserved space S2 is formed on the side of the connecting portion 23 and the mounting bracket 8 far from the first border 1X1 in the third direction F3, and the second reserved space S2 can be used for arranging other components of the battery apparatus 100, such as circuitry. This can reduce space occupation in other positions, helping to improve the compactness and energy density of the battery apparatus 100.

For example, the third direction F3 is an up-down direction, the second border 1X2 is the upper border of the battery cell group 1X, and the first border 1X1 is the lower border of the battery cell group 1X. The connecting portion 23 is located above the flexible bent conductive structure 5. The upper edge of the connecting portion 23 is the first edge 231, and the upper edge of the mounting bracket 8 is the second edge 83. Both the first edge 231 and the second edge 83 are lower than the upper border (that is, the second border 1X2) of the battery cell group 1X, thereby forming the second reserved space S2 above the connecting portion 23 and the mounting bracket 8.

In the above technical solution, the dimension of the connecting portion 23 in the up-down direction is set to be relatively small, so that spaces can be formed above and below the connecting portion 23, for example, the upper space can be used for wiring and the lower space can be for arranging the flexible bent conductive structure 5. In this way, the vertical space at the connecting portion 23 can be fully utilized, and the space occupation at other positions can be reduced, helping to improve the compactness and energy density of the battery apparatus 100.

In some embodiments of this application, with reference to FIG. 3 and FIG. 21, one of a length direction and a width direction of the box 20 is the first direction F1, the other is the second direction F2, a height direction of the box 20 is the third direction F3, and inside the box body 7, multiple mounting brackets 8 arranged along the first direction F1 are provided at two end positions in the second direction F2.

In the above technical solution, multiple battery cell groups 1X are stacked along the first direction F1. When a reinforcing partition 2 is sandwiched between two adjacent battery cell groups 1X in the first direction F1, and multiple reinforcing partitions 2 are sandwiched between multiple battery cell groups 1X stacked along the first direction F1, multiple mounting brackets 8 are arranged, facilitating flexible connection to the multiple reinforcing partitions 2 arranged in the first direction F1, and reducing the difficulty of connection between the reinforcing partitions 2 and the mounting brackets 8. Moreover, the mounting brackets 8 are arranged at the two ends inside the box body 7 in the second direction F2, thereby reducing the difficulty of connection between the mounting brackets 8 and the box body 7.

In some embodiments of this application, with reference to FIG. 3 and FIG. 21, the thickness direction of the pouch cell 1 is the first direction F1, and the battery cell group 1X includes one pouch cell 1 or multiple pouch cells 1 laid flat on the plane perpendicular to the first direction F1. In other words, any two pouch cells 1 in the battery cell group 1X including multiple pouch cells 1 are not stacked along the first direction F1. Therefore, there is no need to bend the connection position between two adjacent pouch cells 1 in the battery cell group 1X. This can reduce process steps and improve production efficiency. In short, without the need for stacking along the first direction F1, multiple pouch cells 1 in the battery cell group 1X do not require additional bending steps, thereby improving grouping efficiency.

In this way, whether the battery cell group 1X includes one pouch cell 1 or multiple pouch cells 1 laid flat on the plane perpendicular to the first direction F1, a thickness of the battery cell group 1X along the first direction F1 is consistent with a thickness of the thickest pouch cell 1 in the battery cell group 1X. Referring to FIG. 21, in some embodiments, the reinforcing partition 2 is sandwiched between the adjacent battery cell groups 1X in the first direction F1, where the stiffness of the reinforcing partition 2 is greater than the stiffness of the pouch shell 11 of the pouch cell 1, a thickness direction of the reinforcing partition 2 may also be the first direction F1, a thickness T1 of the reinforcing partition 2 is less than a thickness T2 of the battery cell group 1X, and the reinforcing partition 2 is configured as capable of exchanging heat with an electrode assembly inside the pouch cell 1 through the pouch shell 11 in contact with the reinforcing partition 2. In this embodiment, the reinforcing partition 2 may include the connecting portion 23, or may not include the connecting portion 23; and may be connected to the box 20, or may not be connected to the box 20. When the reinforcing partition 2 is connected to the box 20 but does not include the connecting portion 23, it may be connected to the box 20 through other parts of the reinforcing partition 2.

In the above technical solution, the reinforcing partition 2 is configured as capable of exchanging heat with an electrode assembly inside the pouch cell 1 through the pouch shell 11 in contact with the reinforcing partition 2. In other words, the reinforcing partition 2 exchanges heat with the electrode assembly in the pouch shell 11 that the reinforcing partition 2 is in contact with. It can be understood that the intermediate medium for heat transfer between the reinforcing partition 2 and the electrode assembly includes but is not limited to the pouch shell 11, for example, may be the pouch shell 11 or an electrolyte (in solid or liquid form).

Therefore, the heat transfer capability of the reinforcing partition 2 can be utilized to enable the reinforcing partition 2 to achieve the purposes of dissipating heat and equalizing temperature for the pouch cell 1, optimizing the performance and service life of the pouch cell 1. Moreover, the reinforcing partition 2 is disposed between adjacent pouch cells 1, reducing the heat transfer between adjacent pouch cells 1 on two sides of the reinforcing partition 2, thereby enhancing the overall reliability of the battery apparatus 100. Additionally, since the thickness T1 of the reinforcing partition 2 is less than the thickness T2 of the battery cell group 1X, the arrangement of the reinforcing partition 2 does not take up too much space, which is conducive to increasing the energy density of the battery apparatus 100.

In some embodiments of this application, the reinforcing partition 2 covers more than 80% of a total area of all the pouch cells 1 in the battery cell group 1X, for example, 80%, 81%, 82%, 84%, 85%, 90%, 100%, 120%, or the like. That is, along the first direction F1, over 80% of an orthographic projection of the battery cell group 1X is covered by an orthographic projection of the reinforcing partition 2.

For example, the reinforcing partition 2 sandwiched between two adjacent battery cell groups 1X is an integrated structure. In this case, when the battery cell group 1X includes multiple pouch cells 1 arranged flat on the plane perpendicular to the first direction F1, at least part of the multiple pouch cells 1 can be covered by the same reinforcing partition 2, thereby simplifying processing.

In the above technical solution, the reinforcing partition 2 covers more than 80% of the total area of all the pouch cells 1 in the battery cell group 1X, allowing for a relatively large heat transfer surface and support surface between the battery cell group 1X and the reinforcing partition 2. This allows the reinforcing partition 2 to provide good support, heat transfer, and separation for the battery cell group 1X.

In some embodiments, the reinforcing partition 2 is bonded to the battery cell group 1X. For example, the reinforcing plate 2 may be fixed to the pouch shell 11 of the adjacent pouch cell 1 through adhesive bonding. The method of adhesive bonding is not limited, which may be, for example, applying adhesive or using double-sided tape.

In this way, the reinforcing partition 2 is bonded to the adjacent battery cell group 1X, making the connection simple and secure, and allowing the reinforcing partition 2 to exchange heat stably with the battery cell group 1X. Additionally, an adhesive layer occupies a small space, allowing the reinforcing partition 2 and the battery cell group 1X to be arranged compactly. This makes the overall structure of the cell array 10 more compact and stable, helping to increase the energy density of the battery.

For example, the reinforcing partition 2 is adhesively fixed to the battery cell group 1X using double-sided tape. For example, during the assembly of the cell array 10, double-sided tape can be applied between the battery cell group 1X and the reinforcing partition 2, for example, the double-sided tape can be first bonded to either the battery cell group 1X or the reinforcing partition 2, and then bonded to the other, thereby achieving adhesive fixation between the battery cell group 1X and the reinforcing partition 2 using double-sided tape.

In this way, the reinforcing partition 2 is bonded to the adjacent battery cell group 1X using double-sided tape, which can prevent glue overflow, prevents the space occupation caused by overflow glue, and eliminates subsequent glue cleaning steps.

In some embodiments, a cavity is formed within the reinforcing partition 2. That is, the reinforcing partition 2 is not a solid structure. It should be noted that the cavity may be filled with a medium, or may not be filled with a medium. When filled with a medium, the cavity may be filled with a buffering medium to absorb force, or may be filled with a heat transfer medium to absorb heat, or the like.

In the above technical solution, a cavity is provided in the reinforcing partition 2, allowing the reinforcing partition 2 to absorb the expansion force of the battery cell group 1X through the cavity, thereby providing space for swelling. This can prevent excessive pressure on the battery cell group 1X when the battery cell group 1X swells too much, thereby improving the reliability of the cell array 10. Moreover, when the cell array 10 experiences some impact, the cavity can be used to absorb the impact force, thereby protecting the battery cell group 1X.

In some embodiments, the cavity includes a heat exchange channel for accommodating a heat exchange medium. In other words, in some cavities, the heat exchange medium can flow through or be stored. In this case, the reinforcing partition 2 can use its own material to exchange heat with the battery cell group 1X, or can exchange heat with the battery cell group 1X via the heat exchange medium in the heat exchange channel, or can exchange heat with the battery cell group 1X through both the material of the reinforcing partition 2 and the heat exchange medium in the heat exchange channel, thereby implementing flexible design for the reinforcing partition 2.

In the above technical solution, the reinforcing partition 2 can use the heat exchange medium within the heat exchange channel to exchange heat with the battery cell group 1X. Through the selection and control of the heat exchange medium, the thermal management performance of the reinforcing partition 2 for the battery cell group 1X can be optimized. Moreover, the heat exchange channel can be connected to an external thermal management system, allowing the heat exchange medium to circulate and have its temperature controlled. In this case, the reinforcing partition 2 can be integrated with liquid cooling and heat exchange functions, sparing the need for additional heat exchange structures. This simplifies the battery apparatus 100, reduces the number of components, and increases the energy density of the battery apparatus 100.

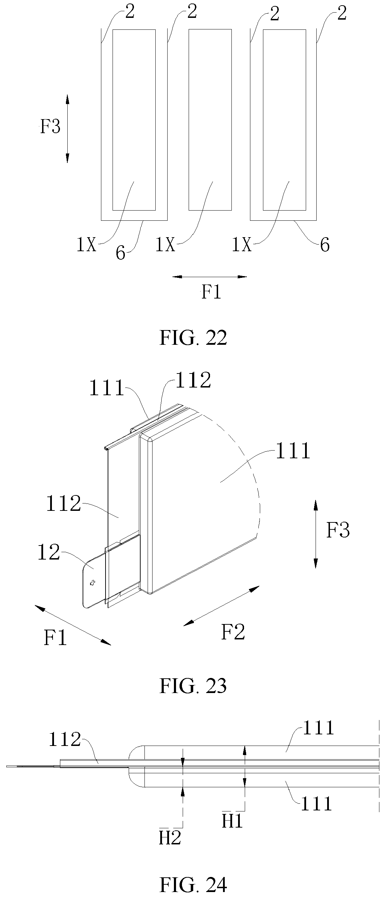

In some embodiments of this application, with reference to FIG. 22, multiple reinforcing partitions 2 are sandwiched between the multiple battery cell groups 1X stacked in the first direction F1, only one of the reinforcing partitions 2 being sandwiched between each two adjacent battery cell groups 1X, and two adjacent reinforcing partitions 2 in the first direction F1 are connected by a connecting plate 6 located on a side of the battery cell group 1X in the third direction F3. That is, the connecting plate 6 is located on a side of the battery cell group 1X in the third direction F3 and connects the two adjacent reinforcing partitions 2 arranged in the first direction F1.

In this way, two adjacent reinforcing partitions 2 arranged in the first direction F1 are connected by the connecting plate 6 located on one side of the battery cell group 1X in the third direction F3, enabling the reinforcing partition 2 to support the pouch cell 1 more reliably. Additionally, the arrangement position of the connecting plate 6 does not interfere with the battery cell group 1X or interfere with the flexible bent conductive structure 5 in the second direction F2.

The first direction F1, the second direction F2, and the third direction F3 are mutually perpendicular to each other. For example, the first direction F1 is the thickness direction of the pouch cell 1, the second direction F2 is the length direction of the pouch cell 1, and the third direction F3 is the width direction of the pouch cell 1.

Each pair of adjacent reinforcing partitions 2 may be connected through the connecting plate 6; or some of the pairs of adjacent reinforcing partitions 2 may be connected through the connecting plate 6, and some of the pairs of adjacent reinforcing partitions 2 may not be connected through the connecting plate 6. The connection between the reinforcing partition 2 and the connecting plate 6 may be assembled together, or may be integrally formed.

For example, with reference to FIG. 22, the connecting plate 6 is disposed between the two reinforcing partitions 2 connected by it. In this case, the connecting plate 6 and the two reinforcing plates 2 connected by it form a U-shaped shell.

In some embodiments, the reinforcing partition 2 is sandwiched between each two adjacent battery cell groups 1X in the first direction F1. In this way, the reinforcing partition 2 is sandwiched between each two adjacent battery cell groups 1X in the first direction F1, allowing each battery cell group 1X to obtain support and heat exchange from the reinforcing partition 2, thereby optimizing the reliability and performance of the cell array 10. Certainly, this application is not limited thereto. For example, in other embodiments of this application, the reinforcing partition 2 may not be disposed between some of the adjacent batteries cell groups 1X arranged in the first direction F1.

In some embodiments, referring to FIG. 21, a buffer element 3 is sandwiched between at least two adjacent battery cell groups 1X in the first direction F1, where a stiffness of the buffer element 3 is less than the stiffness of the pouch shell 11.

In this way, the buffer element 3 is disposed between two adjacent battery cell groups 1X, and the stiffness of the buffer element 3 is less than the stiffness of the pouch shell 11, so that the buffer element 3 can provide space for the battery cell group 1X to swell. This allows the buffer element 3 to effectively absorb the swelling deformation of the battery cell group 1X, vibrations from external impacts, and the like, enhancing the overall structural stability of the battery apparatus 100.

A material of the buffer element 3 is not limited, and may be, for example, a foam layer or a silicone gel layer. These materials allow the buffer element 3 to have better force absorption capabilities, with lower weight and cost, facilitating the lightweight and low-cost design of the battery apparatus 100. For example, the battery cell group 1X and buffer element 3 may be fixed through adhesion, or may abut against each other. For example, they may be bonded by applying glue or using double-sided tape. The adhesion fixation using double-sided tape can prevent glue overflow issues.

In some embodiments, referring to FIG. 21, when a reinforcing partition 2 is sandwiched between at least two adjacent battery cell groups 1X in the first direction F1, and a buffer element 3 is sandwiched between at least two adjacent battery cell groups 1X in the first direction F1, multiple reinforcing partitions 2 and multiple buffer elements 3 may be sandwiched between the multiple battery cell groups 1X stacked in the first direction F1, each battery cell group 1X being sandwiched between the buffer element 3 and the reinforcing partition 2. This allows for more balanced arrangement of the reinforcing partitions 2 and the buffer elements 3, ensuring stable and reliable support, heat exchange, and buffering effects for each battery cell group 1X.

Certainly, this application is not limited thereto. For example, the buffer element 3 may alternatively be sandwiched between each two adjacent battery cell groups 1X in the first direction F1. For another example, both the reinforcing partition 2 and the buffer element 3 may be sandwiched between two adjacent battery cell groups 1X, or the like.

In some embodiments, the buffer element 3 covers more than 80% of a total area of all the pouch cells 1 in the battery cell group 1X, for example, 80%, 81%, 82%, 84%, 85%, 90%, 100%, or 120%. In other words, along the first direction F1, more than 80% of an orthographic projection of the battery cell group 1X is covered by an orthographic projection of the buffer element 3.

For example, the buffer element 3 sandwiched between two adjacent battery cell groups 1X is an integrated structure. In this case, when the battery cell group 1X includes multiple pouch cells 1 laid flat on a plane perpendicular to the first direction F1, at least part of the multiple pouch cells 1 can be covered by the same buffer element 3, thereby simplifying processing.

In the above technical solution, the buffer element 3 is arranged to cover more than 80% of the total area of all pouch cells 1 in the battery cell group 1X, allowing for a large buffering and fitting area between the battery cell group 1X and the buffer element 3. This can enhance the buffering effect of the buffer element 3 on the battery cell group 1X, allowing the battery cell group 1X to achieve greater buffering, and improving the reliability of the battery cell group 1X.

In some embodiments, referring to FIG. 23 and FIG. 24, the pouch shell 11 includes two membrane portions 111 arranged and connected in the thickness direction of the pouch cell 1, the two membrane portions 111 each define an accommodating groove, the accommodating grooves of the two membrane portions 111 are open towards each other in the thickness direction of the pouch cell 1, and jointly form an accommodating cavity of the pouch shell 11, and the electrode assembly is disposed in the accommodating cavity. A wall thickness of the membrane portion 111 is less than or equal to 0.2 mm.

In this embodiment, the wall thickness of the membrane portion 111 is less than or equal to 0.2 mm. For example, the wall thickness of the membrane portion 111 may be 0.2 mm, 0.19 mm, 0.17 mm, 0.15 mm, 0.1 mm, or the like. In this embodiment, the wall thickness of the membrane portion 111 is set to be less than or equal to 0.2 mm, so that the pouch shell 11 in the pouch cell 1 occupies a small volume and has a lighter mass. This allows the electrode assembly in the pouch cell 1 to account for a larger proportion in terms of volume and mass, thereby greatly increasing the energy density of the pouch cell 1.

For example, the electrode assembly includes a positive electrode plate, a negative electrode plate, and a separator. The pouch cell 1 primarily operates through the movement of metal ions between the positive electrode plate and the negative electrode plate. The positive electrode plate includes a positive electrode current collector and a positive electrode active substance layer, where the positive electrode active substance layer is applied on a surface of the positive electrode current collector.

For example, the pouch shell 11 may be an aluminum-plastic film, and the two membrane portions 111 of the pouch shell 11 connected in the thickness direction of the pouch cell 1 can be formed by pouch forming on the aluminum-plastic film substrate. The membrane portions 111 each define an accommodating groove, so the pouch shell 11 can be formed by dual pouch forming. For example, during the production and processing of the pouch cell 1, two membrane portions 111 with accommodating grooves can be formed on the pouch shell 11 through dual pouch forming. The electrode assembly is arranged in the accommodating groove of one of the membrane portions 111, and the other membrane portion 111 is folded towards the membrane portion 111 that accommodates the electrode assembly, allowing the two accommodating grooves to cooperate to form an accommodating cavity. The pouch cell 1 is then subjected to subsequent processes such as edge sealing and electrolyte injection, and the two membrane portions 111 form a closed accommodating cavity through edge sealing, thereby forming a complete pouch shell 11.

In some embodiments, with reference to FIG. 23 and FIG. 24, a size of the pouch cell 1 in the thickness direction of the pouch cell 1 is a first size H1, and a size of either of the membrane portions 111 in the thickness direction of the pouch cell 1 is a second size H2. Since the pouch cell 1 has two membrane portions 111 forming the pouch shell 11, and an overall size of the two membrane portions 111 in the thickness direction of the pouch cell 1 is the first size H1, a sum of the second sizes H2 of the two membrane portions 111 is equal to the first size H1. The second sizes H2 of the two membrane portions 111 can be set to be the same or different as required.

In some embodiments, the first size H1 is greater than or equal to 5 mm and less than or equal to 70 mm, for example, 5 mm, 6 mm, 10 mm, 12 mm, 17 mm, 25 mm, 30 mm, 40 mm, 47 mm, 53 mm, 60 mm, 65 mm, or 70 mm. A ratio of the second size H2 to the first size H1 is greater than or equal to 0.4 and less than or equal to 0.6, for example, 0.6, 0.55, 0.5, 0.48, 0.46, 0.45, or 0.4.

The first size H1 is set to be greater than or equal to 5 mm and less than or equal to 70 mm, making the pouch cell 1 relatively thick. This, combined with the relatively thin pouch shell 11, allows the pouch cell 1 to have a higher energy density. Additionally, the thickness of the pouch cell 1 can be flexibly adjusted within a wide range as needed, enabling the pouch cell 1 to better meet the requirements of battery apparatuses 100 with different size specifications.

The ratio of the second size H2 to the first size H1 is set to be greater than or equal to 0.4 and less than or equal to 0.6, making the sizes of the two membrane portions 111 in the first direction F1 relatively consistent. This ensures that both membrane portions 111 maintain sufficient mechanical strength to satisfy the forming requirements of the pouch shell 11, thereby forming a stable and reliable pouch shell 11 when the first size H1 of the pouch cell 1 in this embodiment is set to be greater than or equal to 5 mm and less than or equal to 70 mm.

In this embodiment, the thickness of the pouch shell 11 is set to be less than 0.2 mm, the ratio of the second size H2 of either membrane portion 111 to the first size H1 is greater than or equal to 0.4 and less than or equal to 0.6, and the first size H1 is greater than or equal to 5 mm and less than or equal to 70 mm, allowing the pouch cell 1 to have a relatively large thickness and high energy density. With the same volume, compared to multiple thinner pouch cells 1, a smaller number of pouch cells 1 are arranged in this embodiment. This can reduce the proportion of the pouch shells 11 therein, enabling the multiple pouch cells 1 within the same volume to achieve a higher energy density. This can also reduce the number of structural components in the battery apparatus 100, such as the reinforcing partitions 2 and buffer elements 3, and increase the arrangement space for the pouch cells 1 in the battery apparatus 100, thereby greatly increasing the overall energy density of the battery apparatus 100.

When the pouch cell 1 in this embodiment is assembled and arranged in the battery apparatus 100, within the same arrangement space, the battery apparatus 100 can achieve greater energy density by arranging fewer pouch cells 1. Due to the reduced number of pouch cells, the number of supporting structures for supporting the pouch cells 1 and structural components for heat conduction, adhesive fixation, and the like is also reduced. This allows more space for arranging the pouch cells 1 in the battery apparatus 100, thereby greatly enhancing the overall energy density of the battery apparatus 100.

For example, the ratio of the second size H2 to the first size H1 may be greater than or equal to 0.45 and less than or equal to 0.55. For example, the ratio of the second size H2 to the first size H1 is 0.45, 0.46, 0.48, 0.49, 0.5, 0.51, 0.53, or 0.55. This makes the sizes of the two membrane portions 111 in the first direction F1 more consistent, facilitating processing and manufacturing. This also ensures that the accommodating grooves of the two membrane portions 111 have sufficient depth for arrangement of the electrode assembly, and enables the two membrane portions 111 to maintain relatively consistent mechanical strengths. As a result, the overall structure of the pouch shell 11 is more stable and reliable, so that the pouch cell 1 can function and be used stably and reliably.

For example, the ratio of the second size H2 to the first size H1 may be 0.5. In other words, the two membrane portions 111 have the same sizes in the first direction F1, allowing the two membrane portions 111 to form a symmetrical structure. The sizes of the accommodating grooves of the two membrane portions 111 are also the same. To be specific, the ratio of the second size H2 to the first size H1 is set to 0.5, allowing the two membrane portions 111 to have the same structural configuration, making the processing and forming of the pouch shell 11 more convenient. This also allows the two membrane portions 111 to have consistent mechanical strength and structural performance, resulting in better overall structural stability and reliability of the pouch shell 11, and making the pouch cell 1 more stable.

For example, the first size H1 is greater than or equal to 15 mm and less than or equal to 45 mm, for example, 15 mm, 16 mm, 20 mm, 25 mm, 35 mm, 40 mm, 42 mm, or 45 mm. This allows the pouch cell 1 to have greater thickness, significantly increasing the energy density of the battery apparatus 100, and reducing the probability of decreased structural stability of the pouch cell 1 caused by excessive thickness of the pouch cell 1. This ensures that the pouch cell 1 has an appropriate thickness to function stably and reliably.

For example, the second size H2 is greater than or equal to 3 mm and less than or equal to 35 mm, for example, 3 mm, 5 mm, 6 mm, 8 mm, 15 mm, 30 mm, or 35 mm. In this embodiment, the second size H2 is set to be greater than or equal to 3 mm and less than or equal to 35 mm, allowing the two membrane portions 111 to cooperate to form the pouch shell 11 with the thickness required for the pouch cell, thereby meeting the arrangement requirements of the pouch cell 1.

For example, the second size H2 is greater than or equal to 7 mm and less than or equal to 22 mm, for example, 7 mm, 8 mm, 10 mm, 12 mm, 15 mm, 20 mm, or 22 mm. In this embodiment, the second size H2 is set to be greater than or equal to 7 mm and less than or equal to 22 mm, allowing the membrane portion 111 to have a more appropriate size in the first direction F1. This ensures that the membrane portion 111 has good mechanical strength and structural stability, making the overall structure of the pouch shell 11 more stable and reliable. As a result, the electrode assembly can be arranged stably and reliably within the accommodating cavity, ensuring more stable operation of the pouch cell 1.

During the processing of the pouch cell 1, the two membrane portions 111 can seal the accommodating cavity through the edge sealing process. For example, the edges of the two membrane portions 111 can be connected by hot pressing, cold pressing, welding, or the like, making the accommodating cavity circumferentially sealed.

In some embodiments, the two membrane portions 111 are separate parts with sealed edges on all four sides. The two membrane portions 111 are separate parts and have edge sealing structures 112 on all four sides of the pouch cell 1. In this way, a single membrane portion 111 is easy to process, reducing processing difficulty.

In some embodiments, the two membrane portions 111 are an integral part with three sealed sides. The two membrane portions 111 are an integral part and have edge sealing structures 112 on one long side and two short sides among the four sides of the pouch cell 1. In this way, the number of edge sealing operations can be reduced, and the overall dimension of the pouch cell 1 in the width direction can be reduced, thereby increasing the energy density. Moreover, compared to edge sealing on all four sides, omitting edge sealing on one side can prevent leakage issues caused by inadequate sealing, thereby enhancing the reliability of the pouch cell 1.

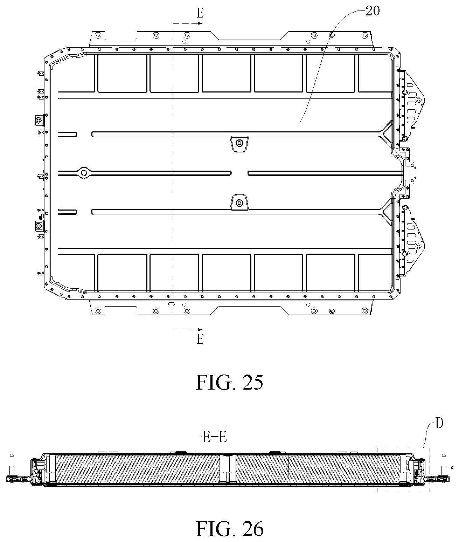

In some embodiments, with reference to FIG. 19 and FIGs. 25 to 27, the battery apparatus 100 includes a cell array 10. The cell array 10 includes multiple battery cell groups 1X stacked in the first direction F1. The battery apparatus 100 includes a box 20 for loading the cell array 10, where one of the length direction and width direction of the box 20 is the first direction F1, and the other is the second direction F2. The thickness direction of the pouch cell 1 is the first direction F1, the second direction F2 is the length direction of the pouch cell 1, and the width direction of the pouch cell 1 is consistent with a height direction of the box 20 (for example, the third direction F3 shown in the figure). The box 20 includes cover plates 71 arranged on two sides of the cell array 10 in the height direction of the box 20. Therefore, such arrangement of pouch cells 1 can improve the uniformity of the forces exerted on the pouch cells 1, which is conducive to the heat dissipation of each pouch cell 1.

For example, at least one cover plate 71 exchanges heat with the cell array 10. Such arrangement of pouch cells 1 allows each pouch cell 1 to effectively exchange heat with the cover plate 71. This allows the cover plate 71 for more consistent and uniform temperature regulation for each pouch cell 1, thereby enhancing the operational stability and reliability of the cell array 10, and improving the performance of the battery apparatus 100. The heat exchange between the cover plate 71 and the cell array 10 may be direct or indirect.

In some embodiments, the width direction of the pouch cell 1 is consistent with the height direction of the box 20, and structural adhesive is filled between the cell array 10 and the cover plate 71. This can enhance the stiffness of the pouch cell 1 along the height direction of the box 20. For example, the structural adhesive is thermal conductive adhesive, and the thermal conductive adhesive can transfer heat between the cover plate 71 and the cell array 10, thereby facilitating the heat dissipation of the pouch cell 1.

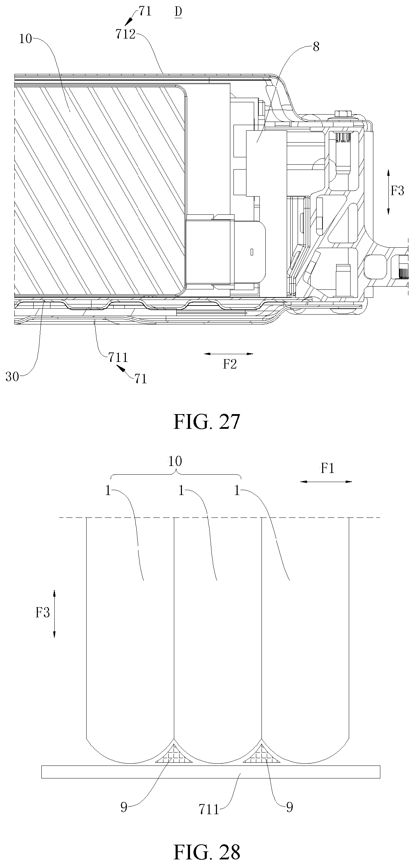

In some embodiments, referring to FIG. 28, a glue blocking strip 9 is disposed inside the box 20, the cover plate 71 includes a bottom plate 711 located below the cell array 10, a fit gap is formed between bottoms of two adjacent pouch cells 1 arranged in the first direction F1, and the glue blocking strip 9 is located between the fit gap and the bottom plate 711.

In the above technical solution, the glue blocking strip 9 arranged can prevent the structural adhesive from overflowing to the adjacent pouch cells, reducing the likelihood of forming hard structures due to adhesive overflow. This can mitigate localized stress concentration issues between adjacent pouch cells and reduce the risk of damage to the pouch cells.

For example, the glue blocking strip 9 can avoid the region directly below the pouch cell 1, allowing a thermal conduction region to be formed between the bottom of the pouch cell 1 and the bottom plate 711.

In some embodiments, the two adjacent pouch cells 1 share one glue blocking strip 9.

In the above technical solution, two adjacent pouch cells 1 share one glue blocking strip 9, thereby reducing the number of glue blocking strips 9 arranged, and improving the assembly efficiency.

In some embodiments, the glue blocking strip 9 is a glue blocking foam, and the glue blocking strip 9 is bonded to the bottom plate 711; or the glue blocking strip 9 is a single-sided adhesive strip, and the glue blocking strip 9 is bonded to the bottom of the pouch cell 1.

In the above technical solution, the glue blocking foam has good compressibility, allowing the pouch cell 1 to compress the glue blocking strip 9 to better prevent structural adhesive from overflowing to adjacent pouch cells. Additionally, the glue blocking strip 9 is bonded to the bottom plate 711, facilitating the installation and fixation of the glue blocking strip 9. Alternatively, with the glue blocking strip 9 designed as a single-sided adhesive strip, the glue blocking strip 9 can be easily bonded to the bottom of the pouch cell 1, making the glue blocking strip 9 and the pouch cell 1 fixed as a whole, thereby improving the overall assembly efficiency of the battery apparatus 100.

In some embodiments, the battery apparatus 100 further includes a heat exchange plate 30, where the heat exchange plate 30 is disposed between the cell array 10 and at least one cover plate 71. In this way, the cell array 10 can exchange heat with the heat exchange plate 30. During operation of the battery apparatus 100, heat generated by each pouch cell 1 in the cell array 10 is dissipated through the heat exchange plate 30. When the cell array 10 needs heating, the heat exchange plate 30 can transfer heat to each pouch cell 1 in the cell array 10.

In this way, through arrangement of the heat exchange plate 30, the design of the heat exchange plate 30 can optimize the temperature regulation effect on the cell array 10. For example, a material with good thermal conductivity may be selected to fabricate the heat exchange plate 30, and a circulating heat exchange medium may be disposed within the heat exchange plate 30 to optimize the temperature regulation effect brought by the heat exchange plate 30 on the cell array 10.

For example, with reference to FIG. 19 and FIGs. 25 to 27, the box 20 includes a top plate 712 and a bottom plate 711 disposed on the upper and lower sides of the cell array 10 along the height direction of the box 20. The heat exchange plate 30 may be a liquid-cooled plate, and the heat exchange plate 30 is arranged between the cell array 10 and the bottom plate 711. During operation of the battery apparatus 100, heat produced by multiple pouch cells 1 in the cell array 10 is dissipated through the heat exchange plate 30. When the cell array 10 needs heating, the heat exchange plate 30 can transfer heat to the pouch cells 1 in the cell array 10.

Certainly, this application is not limited thereto. For example, the heat exchange plate 30 may alternatively be arranged between the cell array 10 and the top plate 712. Alternatively, the heat exchange plate 30 may be arranged between the top plate 712 and the cell array 10, and the heat exchange plate 30 may also be arranged between the bottom plate 711 and the cell array 10.

It should be noted that when the heat exchange plate 30 is disposed between the cell array 10 and the cover plate 71, structural adhesive may or may not be filled between the cell array 10 and the cover plate 71. When the structural adhesive is applied, the structural adhesive may be filled between the cover plate 71 and the heat exchange plate 30, as well as between the heat exchange plate 30 and the cell array 10, thereby enhancing the installation stability of the heat exchange plate 30. If the structural adhesive is thermal conductive adhesive, it can improve the heat exchange performance between the heat exchange plate 30 and the cell array 10, as well as the heat exchange performance between the cover plate 71 and the heat exchange plate 30.

In some embodiments of this application, the pouch cell 1 is any one of a lithium iron phosphate battery cell, a ternary battery cell, and a solid-state battery cell.

The solid-state battery cell may include, but is not limited to, a polymer solid-state battery cell, an oxide solid-state battery cell, a sulfide solid-state battery cell, a halide solid-state battery cell, or the like. The solid-state battery cell may alternatively be a semi-solid-state battery cell or a fully solid-state battery cell.

In the above technical solution, using the above types of pouch cells 1 can provide more options for the design of the battery apparatus, so as to meet different usage requirements. The pouch cell 1 is a lithium iron phosphate battery cell, featuring high reliability, long cycle life, light weight, large capacity, and small internal resistance. The pouch cell 1 is a ternary battery cell, featuring high energy density and good electrochemical performance. The pouch cell 1 is a solid-state battery cell, featuring high energy density, high reliability, light weight, and good performance in both high and low temperatures.

In some embodiments of this application, the pouch cell 1 is a lithium iron phosphate battery cell, and in a positive electrode material of the pouch cell 1, a ratio of a positive electrode active material, a binder, and a conductive agent is 96:(1-3):(1-3); and the pouch cell 1 is a ternary battery cell, and in a positive electrode material of the pouch cell 1, a ratio of a positive electrode active material, a binder, and a conductive agent is 96:(2-3):(1-2).

For example, the pouch cell 1 is a lithium iron phosphate battery cell, and in the positive electrode material of the pouch cell 1, the ratio of the positive electrode active material, the binder, and the conductive agent, LFP:PVDF:conductive carbon black, is preferably 96:2:2. LFP generally refers to LiFePO4.

For example, the pouch cell 1 is a ternary battery cell, and in the positive electrode material of the pouch cell 1, the ratio of the positive electrode active material, the binder, and the conductive agent is preferably that of LiNi0.8Co0.1Mn0.1O2, preferably in a ratio of 96:2.5:1.5.

In some embodiments, a positive electrode of the pouch cell 1 may be a positive electrode plate, the positive electrode plate may include a positive electrode current collector and a positive electrode film layer disposed on at least one surface of the positive electrode current collector, and the positive electrode film layer includes the positive electrode active material.

In an example, the positive electrode current collector has two opposite surfaces in its thickness direction, and the positive electrode film layer is provided on either or both of the two opposite surfaces of the positive electrode current collector.

In an example, the positive electrode current collector may be a metal foil current collector or a composite current collector. For example, the metal foil may be made of stainless steel, copper, aluminum, nickel, carbon electrode, carbon, nickel, titanium, aluminum or stainless steel treated with silver, or the like. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, polyethylene, or the like).

In an example, when the pouch cell 1 in this application is a lithium-ion battery, the positive electrode active material may include at least one of the following materials: phosphate, layered transition metal oxides, and their respective modified compounds. Optionally, the positive electrode active material may include layered transition metal oxides and their respective modified compounds. This helps to increase the energy density of the pouch cell 1. However, this application is not limited to these materials, and other conventional materials that can be used as positive electrode film layers for batteries may also be used. One of these positive electrode active materials may be used alone, or two or more of them may be used in combination.

Examples of the phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

The layered transition metal oxide includes at least one of a compound with a general formula LiₐNi_{b}Co_{c}M_{d}OₑA_{f} and a modified compound thereof, where 0.8≤a≤1.2, 0.3≤b<1, 0<c<1, 0<d<1, 1≤e≤2, 0≤f≤1, M includes at least one of Mn, Al, Zr, Zn, Cu, Cr, Mg, Fe, V, Ti, and B, and A includes at least one of N, F, S, and Cl. Optionally, 0.5≤b<1, further optionally, 0.75≤b≤0.98.

An example of the layered transition metal oxide may include but is not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), LiNi_{0.9}Co_{0.05}Mn_{0.05}O₂ (Ni90 for short), lithium nickel cobalt aluminum oxide (for example, LiNi_{0.80}Co_{0.15}Al_{0.05}O₂), and modified compounds thereof.

When the pouch cell 1 of this application is a sodium-ion battery, the positive electrode active material may include but is not limited to at least one of sodium-containing transition metal oxide, polyanion material (such as phosphate, fluorophosphate, pyrophosphate, or sulfate), or Prussian blue-type material.

In an example, the positive electrode active material for sodium-ion batteries may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material with a general formula XₚM'_{q}(PO₄)ᵣOₓY₃₋ₓ. In the general formula XₚM'_{q}(PO₄)ᵣOₓY₃₋ₓ, 0<p≤4; 0<q≤2; 1≤r≤3; 0≤x≤2; X includes at least one of H+, Li+, Na+, K+, and NH4+; M' is a transition metal cation, optionally at least one of V, Ti, Mn, Fe, Co, Ni, Cu, and Zn; and Y is a halogen anion, optionally at least one of F, Cl and Br.

In the embodiments of this application, the modified compounds of each positive electrode active material may be obtained through doping modification and/or surface coating modification of the positive electrode active material, such as carbon coating modification or fast ion conductor coating modification.

During charge and discharge, the pouch cell 1 experiences intercalation, deintercalation, and consumption of active ions such as Li, and the pouch cell 1 has varying molar content of Li at different discharge states. In the examples of the positive electrode active materials listed in the embodiments of this application, the molar content of Li refers to the initial state of the material, that is, the state before use. When the positive electrode active material is applied in a battery system, the molar content of Li may change after charge-discharge cycles.

In the examples of the positive electrode active materials listed in the embodiments of this application, the molar content of oxygen O is only a theoretical value. Lattice oxygen release can cause changes in the molar content of oxygen O. In practice, the molar content of oxygen O may fluctuate.

In the embodiments of this application, the content of elements in the positive electrode active material has a well-known meaning in the art and can be measured using equipment and methods well-known in the art, for example, measured using an inductively coupled plasma optical emission spectrometer (ICP-OES, model: Thermo ICAP7400) with reference to EPA 6010D-2014 Inductively Coupled Plasma - Atomic Emission Spectroscopy. First, 0.4 g of positive electrode active material is weighed, and 10 mL of aqua regia (with a 50% concentration) is added. Then, the mixture is placed on a 180°C hotplate for 30 minutes. After digestion on the hotplate, the volume is made up to 100 mL and a quantitative test is conducted using the standard curve method.

In some embodiments, the positive electrode may be made of foamed metal. The foamed metal may be foamed nickel, foamed copper, foamed aluminum, foamed alloy, foamed carbon, or the like. When foamed metal is used as the positive electrode, a positive electrode film layer may or may not be disposed on a surface of the foamed metal. In an example, within the foamed metal, s lithium source material, potassium metal, or sodium metal may be filled and/or deposited, where the lithium source material is lithium metal and/or a lithium-rich material.

In some embodiments, the positive electrode film layer further optionally includes a positive electrode conductive agent. The embodiments of this application impose no special limitations on a type of the positive electrode conductive agent. In an example, the positive electrode conductive agent may include at least one of superconductive carbon, conductive graphite, acetylene black, carbon black, ketjen black, carbon dots, carbon nanotubes, graphene, and carbon nanofibers. In some embodiments, a mass percentage of the positive electrode conductive agent in the positive electrode film layer is ≤5wt%.

In some embodiments, the positive electrode film layer further optionally includes a positive electrode binder. The embodiments of this application impose no special limitations on a type of the positive electrode binder. In an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, a mass percentage of the positive electrode binder in the positive electrode film layer is ≤5wt%.

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be N-methylpyrrolidone (NMP), but is not limited thereto.

In some embodiments, a negative electrode may be a negative electrode plate, the negative electrode plate may include a negative electrode current collector and a negative electrode film layer disposed on at least one surface of the negative electrode current collector, and the negative electrode film layer includes a negative electrode active material.

In an example, the negative electrode current collector includes two opposite surfaces in its thickness direction, and the negative electrode film layer is disposed on either or both of two opposite surfaces of the negative electrode current collector.

In an example, the negative electrode current collector may be metal foil, foamed metal, or a composite current collector. For example, the metal foil may be made of silver surface-treated aluminum, stainless steel, copper, aluminum, nickel, baked carbon, carbon, nickel, titanium, or the like. The foamed metal may be foamed nickel, foamed copper, foamed aluminum, foamed alloy, foamed carbon, or the like. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, polyethylene, or the like).

In an example, the negative electrode active material may be a well-known negative electrode active materials used for pouch cells in the art. In an example, the negative electrode active material may include at least one of the following materials: carbon material (for example, including at least one of artificial graphite, natural graphite, soft carbon, and hard carbon), silicon-based material, tin-based material, lithium titanate, and the like. The silicon-based material may include at least one of elemental silicon, a silicon oxide compound, a silicon carbon composite, a silicon nitrogen composite, and a silicon alloy. The tin-based material may include at least one of elemental tin, tin oxide, and tin alloy. However, this application is not limited to these materials, and other conventional materials that can be used as negative electrode film layers for batteries may also be used. One of these negative electrode film layers may be used alone, or two or more of them may be used in combination.

In some embodiments, the negative electrode active material includes element silicon, the element silicon may exist in the form of a silicon-based material. For example, the silicon-based material may include, but are not limited to, elemental silicon, a silicon oxide compound, a silicon carbon composite, a silicon nitrogen composite, and a silicon alloy. The introduction of element silicon can increase the energy density of the pouch cell.

In some embodiments, a mass content of element silicon in the negative electrode film layer ranges from 1wt%% to 32wt%, optionally from 2wt% to 19wt%, and further optionally from 6wt% to 13wt%. In the pouch cell 1 system, the mass content of element silicon falling within the above range can increase the energy density of the pouch cell 1.

In the embodiments of this application, the mass content of element silicon s in the negative electrode film layer has a well-known meaning in the art, and can be measured using equipment and methods well-known in the art. For example, the negative electrode plate is soaked in a solvent like water, the negative electrode active material is separated from the negative electrode current collector, the negative electrode active material is obtained through suction filtration, and the negative electrode active material is analyzed using the ICAP7400 inductively coupled plasma-optical emission spectrometer from Thermo Fisher Scientific in the United States based on the GB/T30902-2014 standard, to obtain the content of element silicon.

In some embodiments, the negative electrode film layer further optionally includes a negative electrode conductive agent. The embodiments of this application do not impose specific limitations on a type of the negative electrode conductive agent. In an example, the negative electrode conductive agent may include at least one of superconductive carbon, conductive graphite, acetylene black, carbon black, ketjen black, carbon dots, carbon nanotubes, graphene, and carbon nanofibers. In some embodiments, a mass percentage of the negative electrode conductive agent in the negative electrode film layer is ≤5wt%.

In some embodiments, the negative electrode film layer further optionally includes a negative electrode binder. Types of the negative electrode binder is not specially limited in this application. In an example, the negative electrode binder may include at least one of styrene-butadiene rubber (SBR), water-soluble unsaturated resin SR-1B, waterborne acrylic resin (for example, polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS). In some embodiments, a mass percentage of the negative electrode binder in the negative electrode film layer is ≤5%.

In some embodiments, the negative electrode film layer further optionally include another additive. In an example, the another additive may include a thickener, for example, sodium carboxymethyl cellulose (CMC-Na) or PTC thermistor material. In some embodiments, a mass percentage of the another additive in the negative electrode film layer is ≤2wt%.

In some embodiments, the positive electrode current collector may be made of aluminum, and the negative electrode current collector may be made of copper.

In some embodiments, the separation member includes a separator. The separator is not limited to any particular type in this application, and may be any well-known porous separator with good chemical stability and mechanical stability can be selected.

The separator is not limited to any particular type in the embodiments of this application, and may be any well-known porous separator with good chemical stability and mechanical stability.

In some embodiments, a material of the separator may include one or more of glass fiber, non-woven fabric, polyethylene, polypropylene, and polyvinylidene fluoride. The separator may be a single-layer film or a multi-layer composite film, which is not particularly limited. When the separator is a multi-layer composite film, all layers may be made of the same or different materials, which is not particularly limited.

In some embodiments, the separator film may include a porous base film and a coating disposed on at least one side of the porous base film, where the coating may include at least one of inorganic particle or organic particle.

The porous base film may include one or more of polyethylene and polypropylene.

Inorganic particles have good heat resistance, which can enhance the overall heat resistance of the separator membrane. Inorganic particles, within the operating voltage range of sodium-ion batteries, essentially do not undergo oxidation and reduction reactions with metal dendrites. In other words, the inorganic particles are configured as not reacting with alkali metal and/or alkaline earth metal at the nominal voltage of sodium-ion batteries.

In some embodiments, the inorganic particles include one or more of boehmite γ-AlOOH, alumina Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, strontium titanate SrTiO₃, barium titanate BaTiO₃, and magnesium fluoride MgF₂.

In some embodiments, the organic particles include at least one of polystyrene, polyethylene, polyimide, melamine resin, phenolic resin, polypropylene, polyester (for example, polyethylene terephthalate, polyethylene naphthalate, polybutylene terephthalate), polyphenylene sulfide, aromatic polyamide, polyamide-imide, polyimide, a copolymer of n-butyl acrylate and methyl methacrylate, and a mixture thereof.

In some embodiments, the pouch cell 1 further includes an electrolyte solution.

During the charge and discharge process of the battery cell, active ions intercalate and deintercalate between the positive electrode plate and the negative electrode plate. The electrolyte conducts active ions between the positive electrode plate and the negative electrode plate. The electrolyte is not limited to a particular type in the embodiments of this application, and can be selected according to actual needs.

The electrolyte solution includes an electrolytic salt and a solvent. The electrolytic salt and solvent are not specifically limited to particular types, and can be selected according to actual needs.

In some embodiments, the liquid electrolyte further optionally includes an additive. For example, the additive may include a negative electrode film-forming additive, or may include a positive electrode film-forming additive, or may include an additive capable of improving some performance of a battery, for example, an additive for improving overcharge resistance performance of the battery, an additive for improving high-temperature performance of the battery, and an additive for improving low-temperature performance of the battery.

For example, the additive may include at least one of a cyclic carbonate compound containing unsaturated bonds, a sulfate compound, a sulfite compound, a sulfolactone compound, a disulfone compound, a nitrile compound, an aromatic compound, an isocyanate compound, a phosphazene compound, anhydride, a cyclic anhydride compound, a phosphite compound, a phosphate compound, a borate compound, or a carboxylate compound.

It is understandable that when the pouch cell 1 is a lithium iron phosphate battery cell, in the positive electrode material of the pouch cell 1, the positive electrode active material accounts for 96 parts by weight of the total positive electrode material. The binder accounts for 1 to 3 parts by weight of the total positive electrode material (for example, including but not limited to 1, 1.2, 1.5, 1.8, 2, 2.2, 2.5, 2.8, or 3). The conductive agent accounts for 1 to 3 parts by weight of the total positive electrode material (for example, including but not limited to 1, 1.2, 1.5, 1.8, 2, 2.2, 2.5, 2.8, or 3).

For example, when pouch cell 1 is a lithium iron phosphate battery cell, the positive electrode active material is LFP (which may refer to LiFePO₄, namely, lithium iron phosphate), the binder can be PVDF (polyvinylidene fluoride), and the conductive agent can be conductive carbon black. LFP:PVDF:conductive carbon black may be 96:2:2, meaning that if the total weight of the positive electrode active material is divided into 100 parts, LFP accounts for 96 parts, PVDF for 2 parts, and conductive carbon black also for 2 parts. The weight unit of the positive electrode active material may be grams.

When the pouch cell 1 is a ternary battery cell, in the positive electrode material of the pouch cell 1, the positive electrode active material accounts for 96 parts by weight of the total positive electrode material. The binder accounts for 2 to 3 parts by weight of the total positive electrode material (for example, including but not limited to 2, 2.2, 2.5, 2.8, or 3). The conductive agent accounts for 1 to 2 parts by weight of the total positive electrode material (for example, including but not limited to 1, 1.2, 1.5, 1.8, or 2). The ternary battery cell may include but is not limited to a nickel-cobalt-manganese lithium system, a nickel-cobalt-aluminum lithium system, or the like.

For example, a ternary material for a ternary battery cell may be LiNi_{0.8}Co_{0.1}Mn_{0.1}O₂, with the ratio of the positive electrode active material, the binder, and the conductive agent being 96:2.5:1.5, meaning that if the total weight of the positive electrode material is divided into 100 parts, LiNi_{0.8}Co_{0.1}Mn_{0.1}O₂ accounts for 96 parts, the binder for 2.5 parts, and the conductive agent for 1.5 parts.

In the above technical solution, when the pouch cell 1 is a lithium iron phosphate battery cell, a high proportion of positive electrode active material means that more electrochemically reactive substances can be accommodated within the limited electrode assembly. This helps increase the capacity and energy density of the battery apparatus 100, allowing the lithium iron phosphate battery cell to output higher power with relatively small volume and weight, meeting application scenarios with specific energy density requirements. The use of binders and conductive agents within the above ranges can reduce the cost of auxiliary materials, thereby lowering the overall cost of the battery apparatus 100. When pouch cell 1 is a ternary battery cell, due to the relatively complex structure and surface properties of the ternary material, using the positive electrode active material, binder, and conductive agent at the above ratio ensures good adhesion between the positive electrode active material particles and between the active material and the current collector. This increases the mechanical stability and integrity of the electrode assembly, reduces the risk of active material shedding and electrode pulverization during charge and discharge, and extends the cycle life of the battery apparatus 100.

In some embodiments of this application, the two electrode terminals 12 forming a connection may be of the same or opposite polarities, allowing multiple battery cell groups 1X to be connected in series and/or parallel. In this way, serial and/or parallel connections can be implemented as required, allowing for flexible configuration of the battery apparatus 100. For example, the two electrode terminals 12 forming a connection can both be positive electrodes, implementing parallel connection between the pouch cells 1 by connecting the electrode terminals 12 of the same polarity. For another example, one of the two electrode terminals 12 forming the connection is a positive electrode and the other is a negative electrode, implementing series connection between the pouch cells 1 by connecting the electrode terminals 12 of opposite polarities.

In some embodiments of this application, all pouch cells 1 in the battery apparatus 100 may be connected in series and/or parallel to form a battery cell module 101 (as shown in FIG. 3), and the battery cell module 101 outputs a positive electrode connection terminal and a negative electrode connection terminal.

According to a second aspect, an embodiment of this application further provides an electric apparatus including the battery apparatus 100 according to any one of the above solutions.

In the above technical solution, as the grouping efficiency of battery apparatus 100 can be improved, the manufacturing costs of the electric apparatus can be reduced.

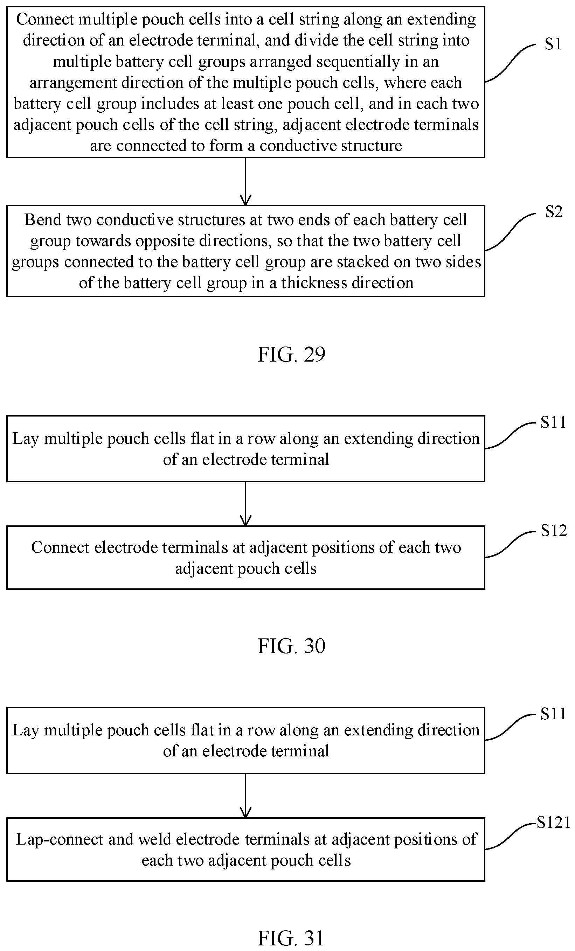

According to a third aspect, an embodiment of this application further provides a method for processing a battery apparatus 100. The battery apparatus 100 includes multiple pouch cells 1, and electrode terminals 12 respectively extend from two terminals of the pouch cell 1. With reference to FIG. 29, the processing method includes: step S1. connecting the multiple pouch cells 1 into a cell string along the extending direction of the electrode terminal 12, and dividing the cell string into multiple battery cell groups 1X arranged sequentially in an arrangement direction of the pouch cells, where each battery cell group 1X includes at least one pouch cell 1, and in each two adjacent pouch cells 1 of the cell string, adjacent electrode terminals 12 are connected to form a conductive structure 4; and step S2. bending the two conductive structures 4 at two ends of each battery cell group 1X towards opposite directions, so that the two battery cell groups 1X connected to the battery cell group 1X are stacked on two sides of the battery cell group 1X in a thickness direction.

The extending direction of the electrode terminal 12 is perpendicular to the thickness direction of the pouch cell 1. For example, assuming that the extending direction of the electrode terminal 12 is a second direction F2, the second direction F2 is perpendicular to the thickness direction of pouch cell 1, and the thickness direction of pouch cell 1 is the first direction F1. For example, the second direction F2 may be a length direction of the pouch cell 1, but it is not limited thereto. For example, the second direction F2 may alternatively be a width direction of the pouch cell 1.

Therefore, with the above method, multiple battery cell groups 1X can be stacked in the first direction F1, where each battery cell group 1X located between two ends in the first direction F1 has one terminal in the second direction F2 electrically connected to the battery cell group 1X upstream in the first direction F1 through a flexible bent conductive structure 5, and the other terminal in the second direction F2 electrically connected to the battery cell group 1X downstream in the first direction F1 through the flexible bent conductive structure 5. In the above technical solution, the cell array 10 has a high grouping efficiency, and the processing efficiency of the battery apparatus 100 is high, thereby reducing manufacturing costs of the battery apparatus 100.

Due to the step of "connecting the multiple pouch cells 1 into a cell string along the extending direction of the electrode terminal 12", one pouch cell 1 in the cell string is located on a side of an adjacent pouch cell 1 with the electrode terminal 12 extending out, so that the electrode terminal 12 can be positioned between two adjacent pouch cells 1. It should be noted that the multiple pouch cells 1 in a cell string are not limited to being laid flat, that is, side surfaces of the pouch cells 1 in the thickness direction do not need to be coplanar, that is, they can be coplanar or non-coplanar.

The two electrode terminals 12 connected together may be directly connected or indirectly connected.

For the specific characteristics of the battery apparatus 100 described in the third aspect, reference may be made to the description of the battery apparatus 100 in the first aspect, which is not repeated herein.

In some embodiments of this application, with reference to FIG. 30, the step S1 of connecting multiple pouch cells 1 into a cell string along the extending direction of the electrode terminal 12 specifically includes: step S11. laying the multiple pouch cells 1 flat in a row along the extending direction of the electrode terminal 12 (as shown in FIG. 8); and step S12. connecting the electrode terminals 12 at adjacent positions of each two adjacent pouch cells 1. In the above technical solution, each two adjacent pouch cells 1 in the multiple pouch cells 1 laid flat in a row can be connected simultaneously, thereby improving processing efficiency. Being "laid flat" means that side surfaces of the pouch cells 1 laid flat in a row in the thickness direction are coplanar.

Certainly, this application is not limited thereto. For example, in other embodiments of this application, two pouch cells 1 may first be connected together through the electrode terminals 12, and then connected to the next pouch cell 1, thereby forming a cell string. Alternatively, several battery cell groups 1X may first be connected into units, and then the multiple units may be connected to obtain a cell string.

In some embodiments of this application, with reference to FIG. 31, the step S1 of connecting multiple pouch cells 1 into a cell string along the extending direction of the electrode terminal 12 specifically includes: step S121. lap-connecting and welding the electrode terminals 12 at the adjacent positions of each two adjacent pouch cells 1. In this way, the electrode terminals 12 of two adjacent pouch cells 1 are lap-connected and welded, to implement direct welded connection between the two pouch cells 1, further improving the processing efficiency. Additionally, reliable conductivity is provided between the lap-connected and welded electrode terminals 12, enhancing the power supply reliability without the need to introduce conductive components.

For example, the step S12 of connecting the electrode terminals 12 at adjacent positions of every two adjacent pouch cells 1, may specifically be: step S121. lap-connecting and welding the electrode terminals 12 at the adjacent positions of each two adjacent pouch cells 1.

Certainly, this application is not limited thereto. For example, the two electrode terminals 12 connected together may alternatively be connected through a flexible conductive sheet, or by lapping and bonding, or the like.

In summary, in the battery apparatus 100 according to a specific embodiment of this application, the pouch cell 1 is designed into a structure with the electrode terminals 12 protruding from two ends in its length direction. The electrode terminals 12 of two adjacent pouch cells 1 are directly welded together; multiple pouch cells 1 are connected into a row arranged in the second direction F2, the multiple pouch cells 1 are grouped, with one or multiple adjacent pouch cells 1 grouped into one battery cell group 1X, multiple battery cell groups 1X are sequentially arranged in the second direction F2, and then folded by group. To be specific, based on the flexibility of the electrode terminals 12 at the direct welding connection positions of the electrode terminals 12, the welding positions at two ends of each group in the second direction F2 are bent to obtain multiple battery cell groups 1X connected end-to-end and stacked in the first direction F1. Such stacked multiple battery cell groups 1X form the cell array 10, and then the cell array 10 can be loaded into the box 20 as a group, thereby effectively improving the production efficiency of the battery apparatus 100.

It should be noted that, without conflict, the embodiments and features in the embodiments in this application may be combined with each other.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery apparatus, comprising:
multiple battery cell groups, wherein the multiple battery cell groups are stacked in a first direction, and each battery cell group comprises at least one pouch cell; and
each of the battery cell groups located between two ends in the first direction has one terminal in a second direction electrically connected to the battery cell group upstream in the first direction, and the other terminal in the second direction electrically connected to the battery cell group downstream in the first direction;
wherein a flexible bent conductive structure is formed at a connection position of the two interconnected battery cell groups, and the first direction and the second direction are arranged at an angle.

2. The battery apparatus according to claim 1, wherein a thickness direction of the pouch cell is the first direction, and the battery cell group comprises one pouch cell or multiple pouch cells laid flat on a plane perpendicular to the first direction.

3. The battery apparatus according to claim 2, wherein the multiple pouch cells laid flat in the battery cell group are arranged in the second direction, and two adjacent pouch cells are connected at adjacent positions.

4. The battery apparatus according to claim 1, wherein the battery apparatus comprises a first cell array, the first cell array comprises the multiple battery cell groups stacked in the first direction, and each battery cell group in the first cell array comprises one pouch cell.

5. The battery apparatus according to claim 4, wherein the first direction is a thickness direction of the pouch cell, the second direction is a length direction of the pouch cell, and same-side terminals of two adjacent pouch cells are connected by the flexible bent conductive structure.

6. The battery apparatus according to claim 5, wherein each pouch cell in the first cell array has a same length, and each pouch cell has a same width.

7. The battery apparatus according to claim 5 or 6, wherein the battery apparatus comprises multiple first cell arrays arranged in the second direction.

8. The battery apparatus according to claim 7, wherein two adjacent first cell arrays arranged along the second direction are connected by an inter-array conductive structure.

9. The battery apparatus according to claim 8, wherein in the two adjacent first cell arrays arranged along the second direction, adjacent terminals of the two battery cell groups located at the ends in the first direction and opposite in the second direction are connected by the inter-array conductive structure.

10. The battery apparatus according to claim 1, wherein the battery apparatus comprises a second cell array, wherein the second cell array comprises multiple battery cell groups stacked in the first direction, and at least one battery cell group in the second cell array comprises multiple pouch cells.

11. The battery apparatus according to claim 10, wherein the first direction is a thickness direction of the pouch cell, and all pouch cells in the battery cell group comprising the multiple pouch cells are laid flat on a plane perpendicular to the first direction.

12. The battery apparatus according to claim 10 or 11, wherein the second direction is a length direction of the pouch cell, the multiple pouch cells comprised in the battery cell group in the second cell array are arranged along the second direction, and adjacent terminals of two adjacent pouch cells are connected by a conductive structure, and the conductive structure at the end of the battery cell group in the second direction is a flexible structure and is bent to form the flexible bent conductive structure.

13. The battery apparatus according to claim 12, wherein each battery cell group in the second cell array has a consistent total length in the second direction.

14. The battery apparatus according to any one of claims 10 to 13, wherein each battery cell group in the second cell array comprises pouch cells in a same shape, a same arrangement, and a same quantity.

15. The battery apparatus according to any one of claims 1 to 14, wherein the second direction is the length direction of the pouch cell, electrode terminals extend from two terminals of the pouch cell in the length direction, adjacent pouch cells are connected by the adjacent electrode terminals, and the battery cell group comprises one pouch cell or multiple pouch cells arranged sequentially in the second direction.

16. The battery apparatus according to claim 15, wherein the first direction is the thickness direction of the pouch cell, a width direction of the pouch cell is a third direction, and projections of two adjacent battery cell groups stacked in the first direction overlap in the first direction.

17. The battery apparatus according to any one of claims 1 to 16, wherein the pouch cell comprises a pouch shell and an electrode terminal, the electrode terminal is connected to an electrode assembly inside the pouch shell, and comprises a lead-out portion extending out of the pouch shell, adjacent lead-out portions of adjacent pouch shells are directly or indirectly connected to form a conductive structure, and the conductive structure at the end of the battery cell group in the second direction is a flexible structure and is bent to form the flexible bent conductive structure.

18. The battery apparatus according to claim 17, wherein in the flexible bent conductive structure, the lead-out portions from the two pouch cells are lap-connected.

19. The battery apparatus according to claim 18, wherein the two lead-out portions forming the lap connection are connected at a lap joint by welding or conductive adhesive.

20. The battery apparatus according to claim 18 or 19, wherein a lap-connection position of the two lead-out portions in the flexible bent conductive structure does not overlap with a bending position of the flexible bent conductive structure.

21. The battery apparatus according to claim 20, wherein the bending position of the flexible bent conductive structure is centered, and the lap-connection position of the two lead-out portions in the flexible bent conductive structure is located on a side of the bending position in the first direction and opposite the corresponding battery cell group in the second direction.

22. The battery apparatus according to claim 20 or 21, wherein the two lead-out portions forming the lap connection in the flexible bent conductive structure are a first lead-out portion and a second lead-out portion, the battery cell group with the first lead-out portion extending out is a first battery cell group, the battery cell group with the second lead-out portion extending out is a second battery cell group, and the first battery cell group and the second battery cell group are adjacently stacked; a length of the first lead-out portion is greater than a length of the second lead-out portion; the first lead-out portion comprises an extension section, a bending section, and a lap section, wherein the extension section is opposite the first battery cell group in the second direction, the lap section is spaced from the extension section in the first direction, the lap section is opposite the second battery cell group in the second direction, and the bending section is bent, with two ends respectively connected to the extension section and the lap section; and the second lead-out portion is opposite the second battery cell group in the second direction, and is lap-connected to the lap section.

23. The battery apparatus according to claim 22, wherein the second direction is the length direction of the pouch cell, and each pouch cell has the first lead-out portion and the second lead-out portion respectively at two ends in the length direction.

24. The battery apparatus according to claim 20 or 21, wherein the two lead-out portions forming the lap connection in the flexible bent conductive structure have a same length, and the bending position of the flexible bent conductive structure is located at a non-connected overlapping part of the two lead-out portions.

25. The battery apparatus according to claim 17, wherein in the flexible bent conductive structure, the lead-out portions from the two pouch cells are indirectly connected by an adapter piece.

26. The battery apparatus according to claim 25, wherein the adapter piece is lap-connected to the lead-out portion.

27. The battery apparatus according to claim 26, wherein a lap-connection position of the adapter piece and the lead-out portion does not overlap with a bending position of the flexible bent conductive structure.

28. The battery apparatus according to any one of claims 25 to 27, wherein the flexible bent conductive structure is bent at the adapter piece, and the bending position of the flexible bent conductive structure is centered.

29. The battery apparatus according to any one of claims 1 to 28, wherein the bending position of the flexible bent conductive structure does not overlap with a conductive connection position of the two battery cell groups in the flexible bent conductive structure.

30. The battery apparatus according to any one of claims 1 to 29, wherein a bending corner position of the flexible bent conductive structure is a rounded corner.

31. The battery apparatus according to claim 30, wherein the flexible bent conductive structure is U-shaped or C-shaped.

32. The battery apparatus according to any one of claims 1 to 31, wherein two side borders of the battery cell group in the third direction are a first border and a second border, and the flexible bent conductive structure is arranged closer to the first border than the second border in the third direction, to create a first reserved space on a side of the flexible bent conductive structure closer to the second border, wherein the first direction, the second direction, and the third direction are mutually perpendicular to each other.

33. The battery apparatus according to claim 32, wherein the flexible bent conductive structure is located on a side, closer to the first border, of a centerline of the battery cell group in the third direction.

34. The battery apparatus according to claim 32 or 33, wherein the battery apparatus comprises a box for housing the pouch cells, and a reinforcing partition is sandwiched between at least two adjacent battery cell groups in the first direction, wherein a stiffness of the reinforcing partition is greater than a stiffness of the pouch shell of the pouch cell, the reinforcing partition has a connecting portion protruding from the battery cell group in the second direction, and the connecting portion extends into the first reserved space and is connected to the box.

35. The battery apparatus according to claim 34, wherein the box comprises a box body and a mounting bracket, wherein the mounting bracket is installed inside the box body, the mounting bracket is disposed on a side of the battery cell group in the second direction, and the connecting portion is connected to the mounting bracket.

36. The battery apparatus according to claim 35, wherein a side edge of the connecting portion closer to the second border in the third direction is a first edge, a side edge of the mounting bracket closer to the second border in the third direction is a second edge, both the first edge and the second edge are located on a side of the second border closer to the first border, to enable the connecting portion and the mounting bracket to form a second reserved space on a side far from the first border in the third direction.

37. The battery apparatus according to claim 35 or 36, wherein one of a length direction and a width direction of the box is the first direction, and the other is the second direction, a height direction of the box is the third direction, and inside the box body, multiple mounting brackets arranged along the first direction are provided at two end positions in the second direction.

38. The battery apparatus according to any one of claims 1 to 37, wherein the thickness direction of the pouch cell is the first direction, the battery cell group comprises one pouch cell or multiple pouch cells laid flat on the plane perpendicular to the first direction, and the reinforcing partition is sandwiched between at least two adjacent battery cell groups in the first direction, wherein a thickness direction of the reinforcing partition is the first direction, the stiffness of the reinforcing partition is greater than the stiffness of the pouch shell of the pouch cell, a thickness of the reinforcing partition is less than a thickness of the battery cell group, and the reinforcing partition is configured as capable of exchanging heat with an electrode assembly inside the pouch cell through the pouch shell in contact with the reinforcing partition.

39. The battery apparatus according to claim 38, wherein the reinforcing partition covers more than 80% of a total area of all the pouch cells in the battery cell group.

40. The battery apparatus according to claim 38 or 39, wherein multiple reinforcing partitions are sandwiched between the multiple battery cell groups stacked in the first direction, only one of the reinforcing partitions being sandwiched between each two adjacent battery cell groups, and two adjacent reinforcing partitions in the first direction are connected by a connecting plate located on a side of the battery cell group in the third direction, wherein the first direction, the second direction, and the third direction are mutually perpendicular to each other.

41. The battery apparatus according to any one of claims 1 to 40, wherein a buffer element is sandwiched between at least two adjacent battery cell groups in the first direction, wherein a stiffness of the buffer element is less than the stiffness of the pouch shell of the pouch cell.

42. The battery apparatus according to any one of claims 38 to 40, wherein a buffer element is sandwiched between at least two adjacent battery cell groups in the first direction, wherein a stiffness of the buffer element is less than the stiffness of the pouch shell of the pouch cell; and multiple reinforcing partitions and multiple buffer elements are sandwiched between the multiple battery cell groups stacked in the first direction, each battery cell group being sandwiched between the buffer element and the reinforcing partition.

43. The battery apparatus according to any one of claims 1 to 42, wherein the pouch shell of the pouch cell comprises two membrane portions arranged and connected in the thickness direction of the pouch cell, the two membrane portions each define an accommodating groove, the accommodating grooves of the two membrane portions are open towards each other in the thickness direction of the pouch cell, and jointly form an accommodating cavity of the pouch shell, and the electrode assembly of the pouch cell is disposed in the accommodating cavity.

44. The battery apparatus according to claim 43, wherein a wall thickness of the membrane portion is less than or equal to 0.2 mm, a size of the pouch cell in the thickness direction of the pouch cell is a first size, a size of the membrane portion in the thickness direction of the pouch cell is a second size, a ratio of the second size to the first size is greater than or equal to 0.4 and less than or equal to 0.6, and the first size is greater than or equal to 5 mm and less than or equal to 70 mm.

45. The battery apparatus according to claim 43 or 44, wherein the two membrane portions are separate parts and each has edge sealing structures on all four sides of the pouch cell.

46. The battery apparatus according to claim 43 or 44, wherein the two membrane portions are an integral part and have edge sealing structures on one long side and two short sides among the four sides of the pouch cell.

47. The battery apparatus according to any one of claims 1 to 46, wherein the battery apparatus comprises a cell array, the cell array comprises multiple battery cell groups stacked in the first direction, and the battery apparatus comprises a box for housing the cell array, wherein one of a length direction and a width direction of the box is the first direction, and the other is the second direction, the thickness direction of the pouch cell is the first direction, the second direction is the length direction of the pouch cell, the width direction of the pouch cell is consistent with a height direction of the box, and the box comprises cover plates arranged on two sides of the cell array in the height direction of the box.

48. The battery apparatus according to claim 47, wherein at least one of the cover plates exchanges heat with the cell array.

49. The battery apparatus according to claim 47 or 48, wherein structural adhesive is filled between the cell array and the cover plate.

50. The battery apparatus according to claim 49, wherein the structural adhesive is thermal conductive adhesive.

51. The battery apparatus according to claim 49 or 50, wherein a glue blocking strip is disposed inside the box, the cover plate comprises a bottom plate located below the cell array, a fit gap is formed between bottoms of two adjacent pouch cells arranged in the first direction, and the glue blocking strip is located between the fit gap and the bottom plate.

52. The battery apparatus according to claim 51, wherein the two adjacent pouch cells share one glue blocking strip.

53. The battery apparatus according to claim 52, wherein the glue blocking strip is a glue blocking foam, and the glue blocking strip is bonded to the bottom plate; or the glue blocking strip is a single-sided adhesive strip, and the glue blocking strip is bonded to the bottom of the pouch cell.

54. The battery apparatus according to any one of claims 47 to 52, wherein the battery apparatus further comprises a heat exchange plate, wherein the heat exchange plate is disposed between the cell array and at least one of the cover plates.

55. The battery apparatus according to any one of claims 1 to 54, wherein the pouch cell is any one of a lithium iron phosphate battery cell, a ternary battery cell, and a solid-state battery cell.

56. The battery apparatus according to claim 55, wherein the pouch cell is a lithium iron phosphate battery cell, and in a positive electrode material of the pouch cell, a ratio of a positive electrode active material, a binder, and a conductive agent is 96:(1-3):(1-3); and the pouch cell is a ternary battery cell, and in a positive electrode material of the pouch cell, a ratio of a positive electrode active material, a binder, and a conductive agent is 96:(2-3):(1-2).

57. An electric apparatus, comprising the battery apparatus according to any one of claims 1 to 56.

58. A method for processing a battery apparatus, wherein the battery apparatus comprises multiple pouch cells, and electrode terminals respectively extend from two terminals of the pouch cell, wherein an extending direction of the electrode terminal is perpendicular to a thickness direction of the pouch cell; and the processing method comprises the following steps:
connecting the multiple pouch cells into a cell string along the extending direction of the electrode terminal, and dividing the cell string into multiple battery cell groups arranged sequentially in an arrangement direction of the pouch cells, wherein each battery cell group comprises at least one pouch cell, and in each two adjacent pouch cells of the cell string, adjacent electrode terminals are connected to form a conductive structure; and
bending the two conductive structures at two ends of each battery cell group towards opposite directions so that the two battery cell groups connected to the battery cell group are stacked on two sides of the battery cell group in a thickness direction.

59. The method for processing a battery apparatus according to claim 58, wherein the step of connecting the multiple pouch cells into a cell string along the extending direction of the electrode terminal specifically comprises the following steps:
laying the multiple pouch cells flat in a row along the extending direction of the electrode terminal; and
connecting the electrode terminals at adjacent positions of each two adjacent pouch cells.

60. The method for processing a battery apparatus according to claim 58 or 59, wherein the step of connecting the multiple pouch cells into a cell string along the extending direction of the electrode terminal specifically comprises the following step:
lap-connecting and welding the electrode terminals at the adjacent positions of each two adjacent pouch cells.
